(19) **Europäisches Patentamt European Patent Office Office européen des brevets**

(11) **EP 3 475 033 B1**

(12) **EUROPÄISCHE PATENTSCHRIFT**

(45) Veröffentlichungstag und Bekanntmachung des Hinweises auf die Patenterteilung:
**23.07.2025 Patentblatt 2025/30**

(21) Anmeldenummer: **17740615.4**

(22) Anmeldetag: **27.06.2017**

(51) Internationale Patentklassifikation (IPC):
**B25J 9/00** (2006.01)    **B25J 9/10** (2006.01)
**B25J 17/00** (2006.01)    **A61H 3/00** (2006.01)
**A61H 1/02** (2006.01)

(52) Gemeinsame Patentklassifikation (CPC):
**B25J 9/0006; A61H 1/0237; A61H 3/00; B25J 9/0057; B25J 9/0069; B25J 9/104; B25J 17/00;** A61H 2201/1623; A61H 2201/163; A61H 2201/1645; A61H 2201/165

(86) Internationale Anmeldenummer:
**PCT/EP2017/000744**

(87) Internationale Veröffentlichungsnummer:
**WO 2018/001555 (04.01.2018 Gazette 2018/01)**

(54) **EXOSKELETT UND STATTHALTER**

EXOSKELETON AND MASTER

EXOSQUELETTE ET AUTOMATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2016 DE 102016007741**

(43) Veröffentlichungstag der Anmeldung:
**01.05.2019 Patentblatt 2019/18**

(73) Patentinhaber: **Reese, Marcel 33689 Bielefeld (DE)**

(72) Erfinder: **Reese, Marcel 33689 Bielefeld (DE)**

(74) Vertreter: **Schulz Junghans Patentanwälte PartGmbB Großbeerenstraße 71 10963 Berlin (DE)**

(56) Entgegenhaltungen:
WO-A1-2004/058457        WO-A1-2013/189693
WO-A1-2015/002850        WO-A2-2013/186705
DE-A1- 102010 023 914     US-A1- 2011 167 945

• YANG WEI ET AL: "Design of an anthropomorphic lower extremity exoskeleton with compatible joints", 2014 IEEE INTERNATIONAL CONFERENCE ON ROBOTICS AND BIOMIMETICS (ROBIO 2014), IEEE, 5 December 2014 (2014-12-05), pages 1374 - 1379, XP032764936, DOI: 10.1109/ROBIO.2014.7090525
• BEIL JONAS ET AL: "New mechanism for a 3 DOF exoskeleton hip joint with five revolute and two prismatic joints", 2016 6TH IEEE INTERNATIONAL CONFERENCE ON BIOMEDICAL ROBOTICS AND BIOMECHATRONICS (BIOROB), IEEE, 26 June 2016 (2016-06-26), pages 787 - 792, XP032930528, DOI: 10.1109/ BIOROB.2016.7523723

**Beschreibung**

Die vorliegende Erfindung betrifft die Verbesserung von Exoskeletten und von Statthaltern sowie ihre Verwendung in teleoperativen Anwendungen in virtuellen Welten oder der realen Welt.

Exoskelette bilden einen robotischen Anzug welcher anthropomorph oder nichtanthropomorph ausgelegt sein kann. Ein anthropomorpher Mechanismus ähnelt in seiner Auslegung der Geometrie und Kinematik eines Trägers sehr. Idealerweise bildet er eine Art "zweiter Haut", so dass jeder Punkt des Mechanismus eine konstante relative Transformation zu einem fixen Referenzpunkt des Nutzerkörpers hat. Das Exoskelett von Insekten kommt diesem Ideal sehr nahe. Anthropomorphe Exoskelette lassen sich an vielen Punkten oder an großen Bereichen fest mit dem menschlichen Körper verbinden, ohne dass sie die Bewegungsfreiheit des Nutzers erheblich einschränken würden oder dass Kräfte und Spannungen zwischen Exoskelett und Nutzer auftreten würden. Dies erlaubt z.B. die Befestigung einer Körperpanzerung oder von haptischen und taktileren Ein- und Ausgabeeinheiten sowohl an dem Körper des Nutzers, dem Exoskelett, oder beidem gleichzeitig. Nicht anthropomorphe Exoskelette werden in der Regel nur an wenigen Punkten des Nutzerkörpers befestigt, z.B. an der Hüfte und den Füßen oder dem Rücken und den Händen. Der Mechanismus ist hier so ausgelegt, dass er den Bewegungen der Hände oder Füße folgt und in seinem Arbeitsraum zu keinem Zeitpunkt mit seinem Bein oder Armmechanismus den Körper des Nutzers an anderen als den Befestigungspunkten berührt. Dabei kann der nicht anthropomorphe Mechanismus jedoch insgesamt sehr andere Bewegungen durchführen als der Nutzer und kann insgesamt mehr oder weniger Freiheitsgrade haben, als die Summe der Freiheitsgrade der bewegten und mit dem Mechanismus verbundenen Körperteile des Nutzers.

Nicht aktuierte Exoskelette können dazu dienen Belastungen auf den Nutzer, z.B. durch schweres Gepäck, Werkzeuge oder auch das Körpergewicht des Nutzers, auf den Boden zu übertragen und so das Gelenk und Muskelsystem des Nutzers zu entlasten. Dadurch kann die Ausdauer des Nutzers und auch seine effektive Stärke erhöht werden.

Motorbetriebene, aktuierte Exoskelette finden Anwendung in verschiedenen Bereichen. Sie können als frei beweglicher, robotischer Anzug getragen werden, welcher über eine eingebaute Energieversorgung und elektronische Steuerung verfügt. Sie können dann dazu dienen, die Kraft und Ausdauer eines Nutzers zu verbessern während er sich ungebunden in einer Umgebung bewegt. Anwendungen liegen in der Unterstützung von schweren körperlichen Arbeiten wie dem Schiffsbau, Erhöhung der körperlichen Leistung und des Schutzes (Panzerung) von Soldaten, der Rehabilitation von Kranken oder dem Einsatz als Gehilfe bei gehbehinderten Menschen.

Kraft- und Drehmomentsensoren an den Gelenken des Exoskeletts, an Kontaktpunkten zwischen Nutzer und Exoskelett oder Sensoren zur Erfassung von myoelektischen Signalen auf der Haut oder implantiert in den Nutzer können genutzt werden, um den Bewegungsablauf des Exoskeletts zu steuern. Insbesondere in der Anwendung als "gehender Rollstuhl" kann die Eingabe der Steuersignale auch über einen Joystick, Gesichts- und Blickerkennung oder durch ähnliche manuelle, akustische oder visuelle Eingabemittel erfolgen. Ortsgebundene Exoskelette werden unter anderem zur Rehabilitation eingesetzt. Sie erlauben es, dass der Nutzer durch einen genau vorgegebenen Bewegungsablauf geführt wird und ggf. auch Kräfte aufbringen muss. Dadurch können sowohl Muskeln als auch Nerven stimuliert werden und die Bewegungsfähigkeit des Nutzers nachhaltig verbessert werden.

Eine andere Anwendung stationärer Exoskelette liegt im Bereich der Interaktion mit virtuellen Welten oder in der Steuerung von realen Robotern. Hier kann ein Exoskelett dazu verwendet werden eine teleoperative Verbindung zwischen Nutzer und Statthalter (virtueller Avatar oder realer Roboter) herzustellen. Dabei verwendet der Nutzer das Exoskelett um direkte Steuerbefehle an den Statthalter zu übermitteln. Die Glieder des Nutzers und des Statthalters führen dann synchron praktisch dieselben Bewegungsabläufe durch. Dabei kann auch ein Kraftfeedback erfolgen, so dass der Nutzer auch die Kräfte erfahren kann, welche auf Seiten des Statthalters wirken und Kräfte des Nutzers auf sein Exoskelett ebenso am Statthalter ausgeübt werden. Anthropomorphe Exoskelette haben hier gegenüber nicht anthropomorphen den Vorteil, dass wirklich jeder Körperteil des Nutzers zur Interaktion zur haptischen Interaktion verwendet werden kann (also nicht etwa nur eine Hand, sondern auch Unterarm und Oberarm) und gleichzeitig Einheiten zur Vermittlung von taktilen und Wärmereizen sowohl am Nutzer als auch am Exoskelett befestigt werden können.

Insbesondere wenn die Beine des Nutzers genutzt werden sollen um direkt die Beine eines Statthalters zu steuern, ggf. mit Kraftrückkopplung (auch KraftFeedback oder Force-Feedback genannt), und der Nutzer so auch das Gleichgewicht des Statthalters direkt regulieren kann oder muss, ist der Nutzer im Exoskelett mit einer Bewegungsplattform verbunden (DE 10 2010 023 914 A1, "Verfahren und Vorrichtung zur Steuerung eines Statthalters"). Der Nutzer steht dann nicht mehr selber auf einem festen Boden, sondern die Füße des Exoskeletts stellen dem Nutzer beim Gehen und Laufen die Beschaffenheit des virtuellen oder entfernten realen Bodens dar, während der Nutzer im Exoskelett durch die Bewegungsplattform über den tatsächlichen Boden angehoben wird. Konstante und zeitabhängige lineare und rotatorische Beschleunigungen werden dem Nutzer im Exoskelett dann durch die Bewegungsplattform dargestellt. Da er üblicherweise eine stereoskope Brille oder andere geeignete Mittel benutzt um einen realistischen visuellen Eindruck der virtuellen oder realen Umgebung des Statthalters zu erfahren, und diese Eindrücke durch die entsprechenden haptischen und ggf. taktilen Eindrücke ergänzt werden, hat er den Eindruck an Stelle des Statthalters in einer virtuellen oder entfernten realen Umgebung zu agieren. Sollte der Nutzer den Statthalter so steuern, dass er nicht geht oder läuft, sondern stattdessen klettert, robbt, kriecht, oder auf den Händen gehen, etc. sollte, wird der Boden natürlich nicht nur durch die Füße, sondern auch durch andere Körperteile oder Bereiche des Exoskeletts dargestellt. Dies könnten insbesondere - aber nicht ausschließlich - die Unterschenkel, Knie, Oberschenkel, Hände, Unterarme, Oberarme, Kopf oder der Rücken sein.

In einer solchen Anwendung ist die Belastbarkeit des Exoskeletts von herausragender Bedeutung. Es muss das Gewicht des Nutzers tragen ohne sich nennenswert zu verformen oder seine Gelenk- und Aktuatorzustände erheblich zu verändern. Darüber hinaus muss es auch zusätzlich große dynamische Kräfte, wie sie beim Laufen oder Springen auftreten können, präzise, mit kleinsten Reaktionszeiten und Verzögerungen, sowie geringsten Schwingungen und Aktuatorabweichungen darstellen. Es ist außerdem wünschenswert, dass die Aktuatoren des Exoskeletts nachgeben können, wenn die Kräfte die der Nutzer auf sie ausübt so stark sind, dass der Mechanismus oder die Steuerung nicht schnell oder stark genug sind, ihnen einen geeigneten Widerstand zu bieten. Diese Rückfahrbarkeit (engl.: "back-drivability") garantiert, dass weder der Nutzer, noch das Exoskelett Schaden nehmen und auch die Kontrolle über das System nicht verloren gehen muss, wenn übergroße oder schnell auftretender Kräfte wirken. Damit mechanische Systeme wie Getriebe, Übersetzungen, Untersetzungen, etc., rückfahrbar sein können, müssen sie über einen hohen mechanischen Wirkungsgrad, also geringe innere Reibung und geringe innere Energieverluste, verfügen.

Ein hoher Wirkungsgrad ist natürlich generell nützlich, da dadurch die Anforderungen an Aktuatoren, Motoren, Getriebe und Energieversorgung gesenkt werden können um eine geforderte Anforderung, wie Leistung, Kraft, oder Geschwindigkeit, zu erreichen. Er erleichtert auch die Modellierung und daher die Kontrolle von robotischen Systemen und insbesondere von Systemen mit Force-Feedback, da innere Verluste und wirkende Kräfte leichter zu quantifizieren sind. Besonders bei mobilen Exoskeletten, welche vom Nutzer getragen werden und über eine eigene Energieversorgung und Regelungseinheiten verfügen, wirkt sich der Wirkungsgrad auch auf die Einsatzdauer, das Gewicht und das Volumen des Exoskeletts und der nötigen Energieversorgung und Energiespeicher aus.

Generell ist es von Vorteil, wenn die Aktuatoren von Exoskeletten möglichst wenig Platz einnehmen und verfügbaren Platz optimal nutzen. Bei beweglichen Exoskeletten besteht ein Interesse daran, möglichst viel Nutzlast tragen zu können. Größere Aktuatoren reduzieren das dafür zur Verfügung stehende Volumen. Von großem Interesse für Anwendungen bei Teleoperationen sind insbesondere Exoskelette, welche maximale Beweglichkeit (im Sinne der möglichen Körperhaltungen) für den Nutzer bereitstellen und alle oder die meisten Freiheitsgrade des Körpers, insbesondere die der Hüfte, aktuieren. Auch mobile Exoskelette mit denen große Lasten getragen werden müssen, haben ähnliche Anforderungen, da auch hier Freiheitsgrade aktuiert werden müssen, die bei geringen Anforderungen noch alleine durch die Körperkräfte des Nutzers betrieben werden können. Solche Exoskelette mit vielen aktuierten Freiheitsgraden erfordern mehr Platz, da mehr und größere Aktuatoren benötigt werden. Auch in der physischen Rehabilitation, als Gehilfe oder "gehender Rollstuhl" verwendete Exoskelette, welche nicht unbedingt große Kräfte tragen müssen, aktuieren idealer Weise alle Freiheitsgrade, da so eine größere und natürlichere Beweglichkeit erreicht wird. Für all diese Anwendungen gilt, dass eine Vielzahl von ggf. großen Aktuatoren, Motoren und Getrieben dann den Bewegungsfreiraum des Nutzers einschränken können, da sie bei extremen Bewegungen, wie einem Ausfallschritt, einem Spreizschritt, dem Überkreuzen der Beine, dem Sitzen, oder einer Innen- oder Außendrehung des Fußes, bzw. des Hüftgelenkes, mit anderen Elementen des Exoskeletts, der Nutzlast, Betriebsaggregaten, der Umgebung oder dem Nutzer selbst in räumlichen Konflikt geraten können.

Ein hoher Wirkungsgrad der Aktuatoren ist hier hilfreich, die Anforderungen an das Exoskelett zu erreichen und Platz zu sparen. Dies ist insbesondere dann schwierig, wenn Getriebe benutzt werden müssen um die nötigen hohen Kräfte zu erzeugen. Mehrstufige Untersetzungen sind in der Regel nicht rückfahrbar, Untersetzungen mit wenigen Stufen sind großen oder zu großen Kräften ausgesetzt oder müssen sehr groß und schwer sein. Bürstenlose Elektromotoren können extrem effizient sein und über hohe Leistung bei kleinem Volumen und Außenmaßen verfügen. Sie können jedoch im Verhältnis nur relativ kleine Drehmomente erzeugen. Bürstenlose Torquemotoren sind ebenfalls sehr effizient, benötigen jedoch aufgrund ihrer großen Durchmesser relativ viel Platz. Sie haben auch erhöhte Anforderungen an die Spannungsversorgung um große Drehmomente ohne Untersetzung erzeugen zu können.

Bekannt sind serielle, elastische Aktuatoren (serial, elastic actuators; "Series Elastic Actuators for legged robots" J. Pratt, Krupp, 2004; "Stiffness Isn't Everything",G. Pratt et al, 1995; US 5,650,704, "ELASTIC ACTUATOR FOR PRECISE FORCE CONTROL", G. Pratt, M. Williamson). Sie finden in humanoiden Robotern und Exoskeletten Anwendung, um Gelenke direkt zu aktuieren oder Seile (ggf. in Bowdenzügen) anzutreiben, welche dann über Umlenkrollen Achsen aktuieren.

Aktuatoren dieser Art werden als Linearaktuatoren eingesetzt um über Hebel Scharniergelenke, wie die des Fußgelenks oder des Knies, anzutreiben (M2 Roboter, MIT). Auch sind Anwendungen bekannt, in denen der Linearaktuator mit dem zu aktuierenden Gelenk ein Dreieck bildet und durch Änderung seiner Länge den Winkel des Gelenks aktuiert (RoboKnee, Yobotics). Im Allgemeinen ergibt sich das Problem, dass bei solchen Mechanismen das Übersetzungsverhältnis mit dem Winkel variiert. Daher müssen in der Konstruktion häufig Kompromisse eingegangen werden, wie z.B. zu große und zu kleine Übersetzungen in manchen Stellbereichen in Kauf genommen werden, um in anderen Stellbereichen die nötigen Werte erzielen zu können. Somit werden auch zu große und unnötig schnelle Aktuatoren und Motoren verwendet. Ebenso ist es schwierig große Winkelbereiche der Aktuation abdecken zu können, da bei größeren Bereichen Totpunkte auftreten, wo kein Drehmoment erzeugt werden kann und die Drehrichtung bei Längenänderung unbestimmt ist. Ebenso ist es nicht trivial den Aktuator an Gliedern des Roboters oder Exoskeletts zu befestigen, da dies unmittelbar die Gesamteigenschaften des Systems beeinflusst.

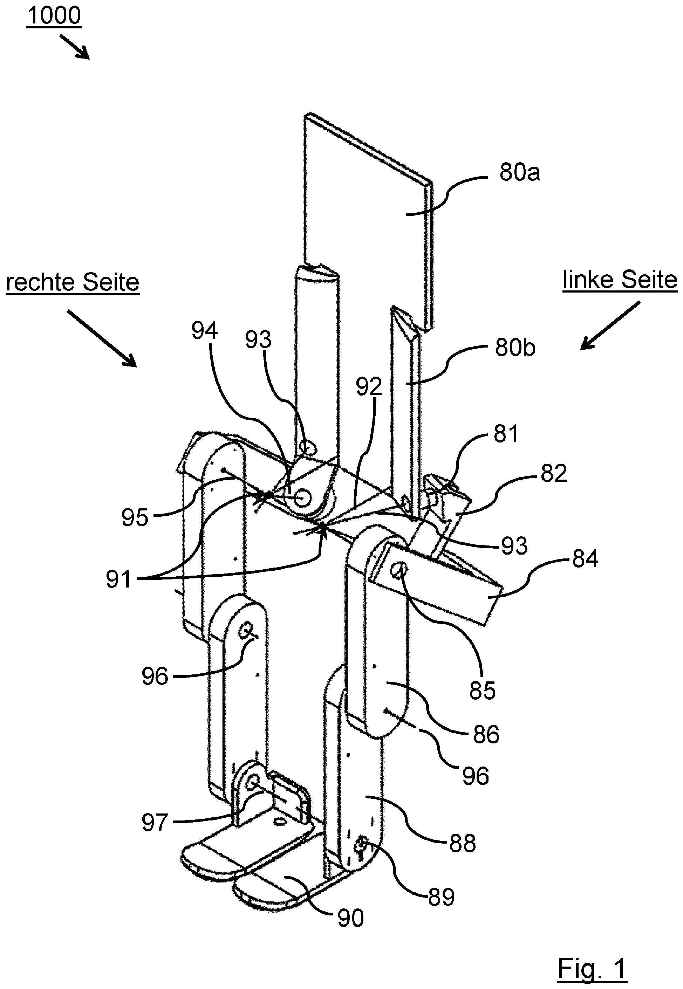

Besonders in den beiden Robotern M2 und M2V2 wurde auch ein Mechanismus eingesetzt, bei dem ein serieller, elastischer Aktuator (auch SEA genannt) ein geschlossenes Seil, oder einen äquivalenten Aufbau, antreibt, welches über zwei Rollen geführt ist. Eine dient als Umlenkrolle während die andere eine Achse antreibt und so ein Gelenk aktuiert (M2: http://www.ai.mit.edu/projects/labtours/LeggedRobots/LeggedRobots.ppt, Seite 17; M2 http://www.jontse.com/portfolio/m2.html, Fig. 1; M2V2 http://robots.ihmc.us/humanoid-robots/

). Dieser Aufbau hat im Vergleich zu seiner Gesamtlänge nur einen kleinen linearen Stellbereich. Dies limitiert bei einem gegebenen Rollendurchmesser der angetriebenen Achse den abgedeckten maximalen Winkelbereich (Differenz von maximalem zu minimalem Stellwinkel der Rolle, der Achse, bzw. des Gelenks). Ebenso wird das maximale Drehmoment an der angetriebenen Achse, für einen gegebenen maximalen Winkelbereich und somit gegebenen Rollendurchmesser, begrenzt. Größere Rollen erzeugen für eine gegebene Kraft des SEA ein größeres Drehmoment, benötigen jedoch dann für den gleichen maximalen Winkelbereich größere linear Stellwege des SEA. In Robotern und Exoskeletten ist der verfügbare Platz begrenzt. Daher ist es vorteilhaft einen möglichst großen Anteil der verfügbaren Länge, z.B. die Länge des Oberschenkels, als linearen Verfahrbereich nutzen zu können.

Andere Aufbauten begegnen diesem Problem, indem sie die linearen Aktuatoren nicht am Gelenk, sondern z.B. am Rücken des Roboters oder Exoskeletts (Walkagain Project, https://www.youtube.com/watch?v=TcAvtglo9Jg) anbringen und Bowdenzüge verwenden um Gelenke anzutreiben. Auch werden mehrere Aktuatoren parallel geschaltet um größere Kräfte ausüben zu können, oder Aktuatoren werden als Antagonisten zueinander betrieben, so dass einer Zug und der andere Druck ausübt, dabei jedoch das Gelenk gemeinsam mit größerer Kraft aktuiert wird. Auch bekannt sind Systeme, wo mehrere Motoren über Zahnräder oder Zahnriemen eine Kugelumlaufspindel eines Aktuators gemeinsam antreiben.

Bei einem perfekt anthropomorphen Exoskelett unterliegen die einzelnen Bauteile den gleichen Transformationen wie die entsprechenden menschlichen Körperteile. So lässt sich z.B. das Kniegelenk in guter Näherung als Scharniergelenk beschreiben. Bei festem Oberschenkel und Flexion oder Extension der Unterschenkel erfährt der Unterschenkel dann eine pure Rotation um eine transversale Achse welche den Schenkkopf des Femur rechtwinklig zur Sagitalebene durchschneidet. Die biologische Achse selbst bewegt (Translation und Rotation) sich beim Beugen des Unterschenkels nur wenig. Das heißt, dass sich für die Verbindung von Oberschenkel und Unterschenkel durch ein Exoskelett ein einfacher Mechanismus eignet, bei dem die Achse seines Scharniergelenks mit der Achse des Kniegelenks, z.B. in ihrer Lage beim voll gestreckten Bein, übereinstimmt. In diesem Fall kann der obere Teil dieses Abschnitts des Exoskeletts fest am Oberschenkel befestigt werden, und der andere Teil fest am Unterschenkel. Da auch das Kniegelenk kein perfektes Scharniergelenk ist, werden jedoch noch Spannungen zwischen Exoskelett und Körperteilen auftreten, wenn das Gelenk stark über seine Ausgangslage hinaus bewegt wird. Dieser Effekt kann durch geeignete Polster leicht kompensiert werden, so dass dem Nutzer keine großen Hemmnisse oder Unannehmlichkeiten bereitet werden, wenn er sein Knie bewegt. Das Knie hat auch einen begrenzten Bereich in dem es um die vertikale Achse rotieren kann. Diese Bewegung ist bei einem solchen Mechanismus unterdrückt, was jedoch die Funktion des Knies nur begrenzt einschränkt. Es ist daher für fast alle Anwendungen ausreichend, das Kniegelenk des Menschen nur als Mechanismus mit einem Freiheitsgrad aufzufassen und ein Exoskelett hier entsprechend zu gestalten. Es kann jedoch, wie beim "SERKA knee actuator", auch ein polyzentrisches Gelenk aktuiert werden. Besonders wenn das Kniegelenk des Exoskeletts aktuiert werden soll, ist es in der Regel ausreichend nur den Hauptfreiheitsgrad (Flexion und Extension) zu berücksichtigen, da er den größten Teil des Bewegungsraums abdeckt und den weitaus größten Teil der Arbeit bei der Bewegung leistet.

Wird die gleiche Annahme beim Sprunggelenk getroffen, so dass nur Flexion und Extension des Exoskeletts möglich sind, wiegt diese Einschränkung schwerer. Während das Sprunggelenk Flexion und Extension praktisch als reine Rotation um eine Achse ausführen kann, besitzt es auch den ausgeprägten Freiheitsgrad der Pronation und Supination (sowie geringe Translationen und Rotationen der Achsen). Dieser zweite Freiheitsgrad ist wichtig um das Gleichgewicht beim Stehen und allen Gangarten zu steuern, sowie damit die Sohle des Fußes, und ggf. die eines getragenen Schuhs, unabhängig von der Neigung des Geländes und der Körperhaltung des Nutzers, stets flach auf einem geneigten Untergrund aufliegen kann. Sind Pronation und Supination unterdrückt, wie z.B. beim Tragen von steifen Schuhen für den Ski-Abfahrtsport (welche Flexion und Extension wenigstens teilweise erlauben), ist die Möglichkeit des Gehens erheblich eingeschränkt. Daher besitzen auch Exoskelette in der Regel mehr als einen Freiheitsgrad für das Fußgelenk, oder es wird auch ganz auf ein Exoskelett für dieses Gelenk verzichtet und nur das obere Bein unterstützt. In diesem Fall endet das Exoskelett am Unterschenkel und der Fuß des Nutzers und die Muskeln des Unterschenkels müssen alle Kräfte und Bewegungen ohne Unterstützung erbringen (z.B. AirLegs, https://www.youtube.com/watch?v=U2e4tGokqe0). Bei aktuierten Exoskeletten für das Fußgelenk wird in der Regel nur der Freiheitgrad der Flexion und Extension des Fußes aktuiert (z.B. BLEEX, "On the Mechanical Design of the Berkeley Lower Extremity Exoskeleton (BLEEX)", Adam Zoss, H.

Kazerooni, Andrew Chu). Besonders bei frei beweglichen Exoskeletten zur Erhöhung der Leistungsfähigkeit des Nutzers ist dies ausreichend, da hier bei der Fortbewegung die größten Kräfte und Leistungen auftreten. Daher kann der Nutzer auch schon durch ein einziges aktuiertes Gelenk des Fußes sehr unterstützt werden, während er den anderen Freiheitsgrad durch seine eigene Muskeltätigkeit steuert. Die Aktuation des zweiten Freiheitsgrades ist schwierig, da die Aktuatoren Platz einnehmen und die Beweglichkeit des Nutzers im Exoskelett daher erschweren können.

Das Hüftgelenk des Menschen ist in guter Näherung ein Kugelkopfgelenk. Es besitzt also drei voneinander unabhängige Freiheitsgrade der Rotation um den Mittelpunkt des Kopfes des Femurs und keine erheblichen translatorischen Freiheitsgrade. Alle diese Freiheitsgrade sind wichtig um eine natürliche Fortbewegung zu ermöglichen, Arbeit zu leisten, das Gleichgewicht zu halten und die Orientierung der Füße zum Untergrund zu steuern. Bei frei beweglichen Exoskeletten zur Unterstützung der Leistungsfähigkeit des Nutzers wird hier in der Regel allein die Flexion und Extension des Oberschenkels aktuiert da in diesem Freiheitsgrad die meiste Arbeit geleistet wird. Bei Exoskeletten welche als Gehilfe eingesetzt werden, wird teilweise auch nur dieser Freiheitsgrad der Hüfte aktuiert (Argo ReWalk Exoskelett, Indego Exoskelett, NASA X1). Ein gelähmter Nutzer muss dann jedoch zusätzlich noch Krücken oder ähnliches benutzen um das Gleichgewicht zu steuern oder die Richtung zu beeinflussen. Bei Exoskeletten, welche als "gehender Rollstuhl" eingesetzt werden, und ohne Krücken auskommen, ist zumindest noch die Abduktion und Adduktion aktuiert (REX Exoskelett). Hier erfolgt die Steuerung beispielsweise mittels eines Joysticks. Bei bestehenden Exoskeletten dieser Art sind die Bewegungsabläufe jedoch auffallend langsam, was an den verwendeten Motoren und Getrieben liegen dürfte, und daran, dass der Nutzer nicht zu großen Kräften ausgesetzt werden darf, so dass sein Körper dem vorgegebenen Bewegungsablauf des Exoskeletts folgen kann.

Zurzeit wird das Hüftgelenk bisher nicht entsprechend seiner inhärenten Freiheitsgrade aktuiert. Stattdessen werden nicht anthropomorphe Mechanismen verwendet, welche wesentlich andere Transformationseigenschaften aufweisen, als die der drei unabhängigen Rotationsfreiheitsgrade des Hüftgelenks. So werden z.B. nur zwei Achsen verwendet, von denen eine in der Regel parallel zur transversal Achse liegt und welche so ausgelegt ist, dass zumindest in der Nähe oder auch durch den Mittelpunkt des Kopfes des Femurs verläuft (BLEEX). Da entlang dieser Achse die meiste Arbeit beim Gehen und Laufen verrichtet wird, bei Flexion und Extension, ist dies auch die Achse die bei mobilen, aktuierten Exoskeletten vorzugsweise aktuiert ist.

Die andere bevorzugte Achse liegt parallel zur sagitalen Achse. Hier wird nicht unbedingt darauf geachtet, dass sie auch wirklich durch den Mittelpunkt des Kopfes des Femur verläuft (POWERLOADER PLL-01, https://www.youtube.com/watch?v=vdhUpR-dzgk ; FORTIS by Lockheed Martin http://robrady.com/design-project/lockheed-martin-fortis-human-powered-exoskeleton; "Design of a Walking Assistance Lower Limb Exoskeleton for Paraplegic Patients and Hardware Validation Using Cop", Jung-Hoon Kim et al., http://cdn.intechopen.com/pdfs-wm/42836.pdf), obwohl dies eine ideale Wahl für einen anthropomorphen Mechanismus wäre. Da häufig auf eine dritte Hüftachse verzichtet wird (XOS 2 von Raytheon Sarcos), und stattdessen der "Oberschenkel" oder "Unterschenkel" des Exoskeletts so gestaltet werden, dass sie auch eine Rotation um die vertikale Achse erlauben und so ermöglichen, dass sich der Fuß entsprechend drehen kann, liegt ein im Wesentlichen nicht anthropomorpher Mechanismus vor. Daher kommt es bei der Bewegung des Beins zu erheblichen Verschiebungen zwischen Körper des Nutzers und Hauptteilen des Exoskeletts. Diese Verschiebungen werden durch entsprechende nachgiebige Mechanismen, zusätzliche nicht aktuierte Gelenke, Polster, etc., an den Verbindungsstellen zwischen Exoskelett und Nutzer erlaubt ("Exoskeleton for Walking Assistance", Qingcong Wu et al.). In diesem Fall eines im Wesentlichen nicht anthropomorphen Exoskeletts kann es daher sinnvoll sein, die Gelenke für die Bewegungen um die Sagitalachse in einer Weise zu gestalten (nicht durch den Kugelkopf), dass Spannungen und Verschiebungen in Grenzen gehalten werden, jedoch die Anthropomorphizität weiter gesenkt wird ("Exoskeleton for Walking Assistance", Qingcong Wu et al). Somit lässt sich mit solchen Mechanismen auch nicht der gesamte Arbeitsraum des Menschen abdecken und sie konzentrieren sich auf wesentliche Bewegungen wie Gehen, Laufen und Sitzen. Hier wird nur ein kleiner Teil des möglichen Arbeitsraums eines Menschen benötigt und somit der mögliche Bewegungsraum der einzelnen Gelenke nur in geringem Umfang genutzt.

Yang Wei et al, "Design of an anthropomorphic lower extremity exoskeleton with compatible joints" offenbart ein annährend anthropomorphes Exoskelett für die untere Extremität mit kompatiblen Hüft- und Kniegelenken, das gelähmten Patienten hilft, eine Rehabilitation auf dem Boden zu realisieren.

WO 2015/002850 A1 offenbart ein Exoskelett, das eine Vielzahl von Strukturelementen enthält, die durch mindestens ein Gelenk miteinander verbunden sind, das so konfiguriert ist, dass es eine Kraft auf ein Körpersegment eines Benutzers ausübt. Um eine möglichst uneingeschränkte Bewegung im Hüftgelenk zu erreichen, schlägt die WO 2015/002850 A1 vor, gekoppelte revolvierenden Gelenken paarweise zu verwenden. Diese Lösung ist jedoch sehr aufwendig.

Beil, Jonas and Asfour, Tamir, "New mechanism for a 3 DOF exoskeleton hip joint with five revolute and two prismatic joints" zeigen ein Exoskelett-Hüftgelenk, mit fünf Achsen, wobei nicht alle Dreh-Achsen durch einen gemeinsamen Punkt des Hüftgelenks verlaufen.

WO 2013/186705 A2 schlägt ebenso eine komplexe und aufwendige Lösung von Gelenkkombinationen vor, um eine möglichst freie und annähernd anthropomorphe Bewegung mit dem Exoskelett erzielen zu können.

WO 2013/189693 betrifft einen Gelenkantrieb mit einer Gelenkeinheit und einem Bogenführungsantrieb. Die Gelenkeinheit umfasst ein erstes und ein zweites Übertragungsrad, die einander gegenüberliegend angeordnet sind. Das erste und das zweite Getrieberad können unabhängig voneinander durch einen entsprechenden ersten bzw. zweiten Aktuator angetrieben werden.

US 2011/167945 A1 offenbart eine Robotergelenk-Antriebsvorrichtung, die eine mögliche Variante eines Antriebs für Gelenke in Exoskeletten darstellt.

DE 102010023914 A1 offenbart eine Steuerung eines Statthalters durch einen Nutzer. Die Erfindung zeichnet sich dadurch aus, dass die Sensoren Haltungen, Positionen, Bewegungen, Kräfte und/oder Drehmomente zumindest von einem Körperteil des Nutzers erfassen und Teile des Statthalters entsprechend bewegt werden können. Die Erfindung lässt sich beispielsweise verwenden bei Teleoperationen. Eine konkrete Lehre, wie ein dazu besonders geeignetes Exoskelett aussehen könnte, offenbart diese Druckschrift nicht.

Es ist die Aufgabe der vorliegenden Erfindung, Exoskelette und Statthalter, wie Roboter und virtuelle Avatare, sowie zugehörige Steuereinheiten derart zu verbessern, dass mit ihnen umfangreiche Bewegungen möglich sind, sie somit einen realistischen Eindruck vermitteln und außerdem schnell und effektiv betrieben werden können.

Diese Aufgabe wird gelöst durch die Vorrichtung nach Hauptanspruch 1. Durch die Unteransprüche werden weitere erfindungsgemäße Verbesserungen beansprucht.

Die in Anspruch 1 beschriebene Vorrichtung betrifft Exoskelette, sowie Statthalter, wie Roboter oder virtuelle Avatare. Bei den Vorrichtungen der genannten Art sollen vielfältige Bewegungen und Bewegungsabläufe erfasst und/oder umgesetzt werden. Deshalb sei darauf hingewiesen, dass die vorliegende Erfindung zwar hauptsächlich anhand eines Exoskeletts beschrieben wird. Sie ist jedoch keinesfalls darauf beschränkt sondern umfasst alle genannten Vorrichtungen.

Die Vorrichtung nach Anspruch 1 enthält, neben weiteren Mitteln, vier Elemente, wobei benachbarte dieser Elemente jeweils drehbar um entsprechende Achsen gelagert sind. Dazu sind zwischen benachbarten Elementen Drehgelenke vorgesehen, die vielfältig gestaltet sein können, wie beispielsweise als Schaft oder dergleichen. Wesentlich dabei ist, dass die genannten drei Achsen im Wesentlichen durch einen gemeinsamen Punkt verlaufen. Bevorzugterweise liegt dieser Punkt im Mittelpunkt des zugehörigen - also des rechten bzw. linken - Hüftgelenks.

Dabei bildet die erste Drehachse mit der zweiten Drehachse einen ersten Winkel $\varphi_1$ und die zweite Drehachse bildet mit der dritten Drehachse einen zweiten Winkel $\varphi_2$.

Diese Erfindung hat den Vorteil, dass sie ermöglicht, Exoskelette mit komplexen Freiheitsgraden, wie für das Hüftgelenk, möglichst anthropomorph zu gestalten und zu erlauben, dass alle Freiheitsgrade möglichst im gesamten Bewegungsbereich des Nutzers mit größeren Kräften, erhöhter Effizient, geringem Platzbedarf und Gewicht, höheren Stellgeschwindigkeiten, höherer Leistung, mit Rückfahrbarkeit (back-drivability), geringem Totgang und kurzen Reaktionszeiten aktuieren zu können.

Insbesondere wird es dadurch möglich, dass ein Exoskelett für die Beine in der Lage ist, das Körpergewicht des Nutzers zu tragen, während er es wie einen robotischen Anzug trägt, und das Exoskelett selbst durch eine Bewegungsplattform getragen und bewegt werden kann. Hierbei kann der Mechanismus nun so steif wirken, dass er dem Nutzer einen harten Boden und schnelle Bewegungen realitätsnah darstellen kann, ohne dass der Nutzer im Exoskelett tatsächlich auf einem Boden stehen würde. Ebenso wird die Leistungsfähigkeit von mobilen Exoskeletten und humanoiden Robotern gesteigert, da auch Freiheitsgrade aktuiert werden können, welche bisher nicht aktuiert werden konnten oder aus verschiedenen Erwägungen nicht aktuiert wurden. Die Anforderungen an die Energieversorgung werden gesenkt und/oder die Reichweiten und Anwendungsdauern verlängert. Bei stationären Exoskeletten zur physischen Rehabilitation kann so der trainierbare Bewegungsraum erhöht und die Wirksamkeit einer Behandlung erhöht oder andere Behandlungen als bisher ermöglicht werden. Durch die neue Geometrie des exoskeletalen Hüftgelenks, und auch durch seine neue Antriebsart, wird eine verbesserte Beweglichkeit von aktuieren Exoskeletten der Beine erreicht. Durch die Möglichkeit der Lokalisierung der Motoren in der Nähe der Gelenke werden Mittel zur Kraft und Leistungsübertragung eingespart und der Mechanismus vereinfacht, im Vergleich zu z.B. Hydraulik-, Kabel- oder Bowdenzugübertragung. Der Hüftmechanismus kann vergleichsweise platzsparend ausgelegt werden und schränkt die verfügbare Nutzlast bei mobilen Exoskeletten wenig ein. Das weitgehend anthropomorphe Verhalten des Exoskeletts erlaubt stabile Befestigung am Nutzer über weite Teile seines Körpers und erleichtert somit das Erzeugen von haptischem Feedback und die Nutzung taktiler Ein- und Ausgabeeinheiten. Ebenso wird die Verwendung eines Gehäuses, einer Panzerung, oder taktiler und thermischen Ein-und Ausgabeeinheiten erleichtert, auch bei gleichzeitiger Aktuierung aller Gelenke, welche den Körper des Nutzers umschließen sowie auch das Exoskelett umschließen kann oder Teil des Exoskeletts sein kann.

Das erste Element, das auch Exo-Rückenplatte oder (Exo-) Hüftplatte genannt wird, ist bevorzugterweise ein plattenförmiges Element. Für den Normalbetrieb wird ein Nutzer damit fest relativ zu seinem Hüftknochen verbunden. Obwohl Teile der Exo-Rückenplatte oder Exo-Hüftplatte abgewinkelt oder gewölbt ausgebildet sein können, weist sie eine Hauptebene auf. Bei einer Ausführung der erfindungsgemäßen Vorrichtung steht die erste der genannten Achsen senkrecht oder im Wesentlichen senkrecht auf der genannten Hauptebene und verläuft somit im Wesentlichen parallel zu der Sagitalachse des Nutzers.

Es ist auch möglich, dass die erste Achse nicht senkrecht auf der Hauptebene des ersten Elements (Exo-Rückenplatte) steht, sondern davon abweicht, obwohl sie weiterhin im Wesentlichen durch den o.g. gemeinsamen Punkt verläuft. Diese Abweichung lässt sich folgendermaßen beschreiben. In Normalstellung verläuft die Hauptebene der Exo-Rückenplatte von oben nach unten (oder umgekehrt) vertikal oder im Wesentlichen vertikal. Davon ausgehend lässt sich eine Vertikalachse definieren, die einerseits im Wesentlichen vertikal und parallel zu dieser Hauptebene und andererseits durch den gemeinsamen Punkt verläuft. Bei dieser Ausführungsform der erfindungsgemäßen Vorrichtung ist die erste Achse um einen dritten Winkel $\alpha$ um die genannte Vertikalachse gedreht, wobei dieser Winkel somit quasi in der Horizontalebene verläuft. Dadurch wird eine größere Drehung der Füße nach innen oder außen (bei negativem Winkel $\alpha$) ermöglicht.

Es ist erfindungsgemäß vorgesehen, dass die erste Achse um eine Horizontalachse um einen vierten Winkel $\beta$ gedreht ist. Diese Horizontalachse verläuft im Wesentlichen senkrecht zu der genannten Vertikalachse, parallel zu der Hauptebene der Exo-Rückenplatte und auch durch den gemeinsamen Punkt. Die zugehörigen Vorteile werden im Rahmen der Beschreibung bevorzugter Ausführungsbeispiele genannt.

Bei einer bevorzugten Ausführung der Erfindung weist der erste Winkel $\varphi_1$ einen Wert auf, der im Bereich von 25 - 45 Grad liegt. Besonders bewährt hat sich ein Wert von etwa 35 Grad.

Es hat sich außerdem bewährt, dass der zweite Winkel $\varphi_2$ einen Wert aufweist, der im Bereich von 60 - 80 Grad liegt. Besonders bewährt hat sich ein Wert von etwa 70 Grad.

Vorrichtungen mit der Kombination der Winkel $\varphi_1$ und $\varphi_2$ in den Bereichen wie in den vorherigen beiden Absätzen beschrieben ergeben Exoskelette, welche über einen großen Arbeitsraum verfügen, welcher generell große Schrittlängen, eine weite Außendrehung des Fußes und allgemein eine hohe Beweglichkeit erlauben. Diese Exoskelette sind besonders für die Steuerung von humanoiden Robotern und virtuellen Avataren mittels Teleoperation geeignet.

Sollte ein besonderes Augenmerk auch auf einfaches Sitzen in der realen Welt gelegt werden, bieten sich Exoskelette an, bei denen die Summe des ersten Winkels ($\varphi_1$) und des zweiten Winkels ($\varphi_2$) zwischen 85-120 Grad liegt und der erste Winkel ($\varphi 1$) einen Wert in dem Bereich von 15-45 Grad hat.

Für den dritten Winkel $\alpha$ und/oder für den vierten Winkel $\beta$ haben sich Werte zwischen 10 und 30 Grad und bevorzugt etwa 20 Grad bewährt.

Weitere Ansprüche betreffen ein fünftes Element, das im Zusammenhang mit einem Exoskelett, einem Statthalter oder dergleichen auch als Fuß bezeichnet werden kann. Dieser Fuß zeichnet sich dadurch aus, dass seine Standfläche, auf der der Nutzer steht (auch als Sohle bezeichnet) ein bestimmtes Profil aufweist. Dieses Profil ist geprägt durch zwei Kreissegmente mit unterschiedlichen Radien von Kreisen. Bevorzugterweise haben diese ihre Mittelpunkte in der Nähe des Sprunggelenks des Nutzers. Es ist außerdem bevorzugt, dass diese Kreise parallel zur Frontalebene des Nutzers liegen. Damit wird ermöglicht, dass er wendige Bewegungen erlaubt, obwohl er nur über eine Achse verfügt. Es sei darauf hingewiesen, dass der Begriff Kreis hier und auch im Zusammenhang mit der Beschreibung bevorzugter Ausführungsbeispiele auch kreisähnliche Geometrien einschließt, wie auch Ellipsen oder dergleichen.

Der erfindungsgemäße Fuß, kann zusammen mit der zuvor beschriebenen erfindungsgemäßen Vorrichtung verwendet werden oder unabhängig davon. Das gilt auch für alle Ausführungsformen, die weiter unten im Rahmen der Beschreibung bevorzugter Ausführungsbeispiele erläutert werden.

Exoskelette oder Statthalter, wie humanoide Roboter benötigen zwei Freiheitsgrade des Fußes, um der Beweglichkeit des Menschen nahe zu kommen. Die Aktuation beider Freiheitsgrade benötigt geeignete Mittel, die Platz und Gewicht benötigen. Je stärker und leistungsfähiger das Exoskelett sein soll, desto schwerer werden im Allgemeinen diese Aktuatoren und benötigen mehr Platz.

Durch die Wahl einer besonderen Sohlenform für die Füße von mobilen Exoskeletten werden die Anforderungen an die Aktuierung der Gelenke des Fußes des Exoskeletts reduziert und nur eine Achse aktuiert, wobei andere Bewegungen unterdrückt sind, und dennoch eine hohe Beweglichkeit des Nutzers mit Exoskelett gewährleistet. Da nun keine Freiheitsgrade des Fußes genutzt werden, um den Fuß des Exoskeletts durch menschliche Kraft direkt anzutreiben, wird die Belastbarkeit des Nutzers im Exoskelett erhöht und größere Kräfte und Leistungen können übertragen werden, ohne dass der Nutzer Gefahr läuft durch zu hohe Kräfte verletzt zu werden oder die nötigen Kräfte nicht mehr aufbringen zu können und daher die Kontrolle über den Bewegungsablauf zu verlieren.

Weitere Ausführungsformen, die als Weiterbildung der Erfindung Verwendung finden können, betreffen das Gebiet der Schwerkraftkompensation (engl.: gravity compensation). Denn in teleoperativen Anwendungen muss das Exoskelett der Beine, welches an einer Hüft- oder Rückenelement mit einem Bewegungssimulator verbunden ist, in der Lage sein das Gewicht des Nutzers zu tragen. Er hat dann z.B. im Stand das Gefühl, dass sein gesamtes Körpergewicht auf seine Fußsohlen wirkt.

Es ist jedoch wünschenswert, dass der Nutzer auch den Eindruck erhalten kann, dass sein Körpergewicht reduziert ist. Das wäre z.B. dann der Fall, wenn er einen realen humanoiden Roboter steuert, welcher in einer Umgebung mit reduzierter Schwerkraft, wie im freien Fall, der Schwerelosigkeit, einem stabilen Orbit um einen Planeten, in beschleunigten Inertialsystemen oder unter Wasser, also unter Einfluss des Auftriebs agiert.

Ebenso treten solche entsprechenden Situationen reduzierter Schwerkraft in virtuellen Welten auf und ein Nutzer kann einen Avatar dort entsprechend steuern wollen. Der Nutzer sollte im Extremfall Schwerelosigkeit vermittelt bekommen können, so dass er ohne Kräfte auf seine Beine, den schwebenden Statthalter steuern kann. Ebenso kann vorgesehen sein, dass der Nutzer mit geringen eigenen Körperkräften überproportionale Kräfte mit einem Statthalter (realer Roboter oder virtueller Avatar) bewirken kann. Bei dieser Kraftverstärkung sollte sich der Nutzer im Exoskelett sich so fühlen können, als wenn er nicht mehr sein gesamtes Körpergewicht zu tragen hat. Es ist ebenso wünschenswert, dass der Nutzer andauernde, größere Kräfte als die seines Körpergewichts erfahren kann. So kann es nötig sein, dass diese großen Kräfte für längere Zeit, z.B. zur Vermittlung von erhöhter Schwerkraft, z.B. ganz auf seine Fußsohlen wirken. Der Nutzer befindet sich in der Regel jedoch tatsächlich im Schwerefeld der Erde, und er muss daran gehindert werden, dass er durch die wirkenden Kräfte der Exo-Beine tatsächlich seine Position ändert.

Teleoperative Methoden können im Allgemeinen auch Kräfte und Drehmomente skalieren. Um die Anforderungen an das Exoskelett zu reduzieren kann es wünschenswert sei, dass stets reduzierte Kräfte, vor allem die auf die Beine, an den Nutzer vermittelt werden, und das Exoskelett nicht das ganze Gewicht des Nutzers tragen können muss. Dies erlaubt die Verwendung leichterer, weniger steifer, schwächerer und kleinerer Exoskelette und schnellere Bewegungen.

Bisher wurde die ganze oder teilweise Aufhebung der Schwere durch das Eintauchen des Nutzers im Exoskelett in eine Flüssigkeit erreicht. Alternativ trägt der Nutzer einen mit Flüssigkeit gefüllten Anzug, mit welchem er am Exoskelett befestigt ist, oder welcher Teil des Exoskeletts ist.

Ziel dieser erfindungsgemäßen Ausführung ist also, es dem Nutzer im Exoskelett zu ermöglichen den Eindruck von ganz oder teilweise aufgehobener Schwere zu vermitteln, ohne dass er sich dazu in einer Flüssigkeit befinden muss und/oder auch die Anforderungen an Exoskelette zu senken. Aufgabe ist des Weiteren erhöhte, andauernde Kräfte auf den Nutzer zu erlauben.

Das wird dadurch erzielt, dass geeignete Vorrichtungen, wie Gurte (wie Sechs- oder Fünfpunktgurte, Klettersitzgurte, etc.), Bänder, Schalen oder Geschirr den Torso, die Hüfte und/oder die Oberschenkel des Nutzers fest mit der Hüftplatte und/oder Rückenplatte des Exoskeletts verbinden, ohne die Bewegungsfreiheit seiner Beine erheblich einzuschränken. Dazu sind insbesondere Gurte und Schalen geeignet, welche zwischen den Beinen und weit oben um die Hüfte angreifen. (Alternativ kann das Gewicht des Nutzers auch an den Oberschenkeln getragen werden, wobei der vermittelte Eindruck hierbei leidet.) Bevorzugt ist diese Tragevorrichtung so ausgelegt, dass sie das gesamte Gewicht des Nutzers in jeder beliebigen Belastungsrichtung tragen kann ohne, dass sich der Nutzer erheblich im Verhältnis zu der Hüftplatte und/oder Rückenplatte verschiebt. Die Trageeinrichtung kann prinzipiell wie bei den Exobionics oder Indego Exoskeletten ausgelegt sein.

Dann kann ein stehender Nutzer im Exoskelett, welches mit der Bewegungsplattform verbunden ist, z.B. die Beine anziehen und beide vom Boden abheben, während sein Torso, gehalten vom Exoskelett und der Tragevorrichtung, die Position beibehält. Umgekehrt, ist es dann auch möglich, dass der Nutzer seine Beine völlig austrecken kann und eine Position einnimmt, die einem Stehen entspricht, er aber dennoch nicht sein Körpergewicht mit seinen Beinen tragen muss und es auch nicht oder nur sehr gering als Belastung auf seine Fußsohlen wirkt.

Optional ist es vorgesehen, dass die Fußsohle des Exoskeletts in Richtung ihrer Normalen verschoben und aktuiert werden kann. Dadurch wird es möglich die Länge des Exo-Beines genau an die effektive Länge des Nutzerbeinens anzupassen, und evtl. vorkommender leichte Fehler oder Änderungen in der Position des Nutzers relativ zur Hüftplatte und/oder Rückenplatte auszugleichen. Es ist vorteilhaft, wenn diese Aktuation schnell geschehen kann, und Kräfte und Drehmomente auf die Platte oder Abstände zum Fuß gemessen und geregelt werden können. Es ist wichtig, das Gewicht des Nutzers möglichst gleichmäßig, mit geringem Druck und großer Kontaktfläche, auf seinen Torso (oder alternativ auf die Oberschenkel) zu verteilen. So wird verhindert, dass sie dem Nutzer zu sehr auffallen und der Eindruck der (teilweisen) Schwerelosigkeit wird verbessert.

Es ist im Allgemeinen wichtig, dass das Gewicht des Nutzers in jeder Richtung wirken kann und in jeder Richtung völlig von der Tragevorrichtung aufgenommen wird. So kann der Nutzer z.B. kopfüber gehalten werden, und dennoch eine fixe Position zur Hüftplatte und/oder Rückenplatte beibehalten. Je nach Anwendung kann die Tragevorrichtung jedoch so gestaltet werden, dass sie nur in die wesentlichen Richtungen wirkt.

Es ist möglich, diese neue Art der Reduktion der Schwerkraft mit bisherigen Methoden unter Nutzung von Auftrieb in Flüssigkeiten zu kombinieren.

Wenn die Tragevorrichtungen so gestaltet sind, dass der Nutzer nicht nach oben aus der Hüftplatte oder Rückenplatte herausgedrückt werden kann, können auf die Füße des Nutzers auch andauernde Kräfte wirken, welche sein Körpergewicht übersteigen. Dadurch kann erhöhte Schwerkraft simuliert werden.

Die Tragevorrichtung selbst kann auch so gestaltet sein, dass sie entspannt oder bewegt werden kann und somit der Grad der Entlastung geändert werden kann. Dazu verfügt die Trageeinrichtung vorzugsweise an Ihren Befestigungspunkten über Stellelemente, wie beispielsweise einstellbare Federelemente (auch Luftfedern oder dergleichen) und/oder geeignete Wägeelemente.

Die Vorrichtung zur Schwerkraftkompensation kann zusammen mit der zuvor beschriebenen erfindungsgemäßen Vorrichtung verwendet werden.

Weitere Ausführungsformen, die als Weiterbildung der Erfindung Verwendung finden können, betreffen eine Vorrichtung mit einem Motor, der im Betrieb über eine Spindel ein Mittel mit Gewinde translatorisch bewegt. Dieses ist mit einem umlaufenden Element, wie einer Kette oder dergleichen, verbunden, die dann eine Welle rotatorisch bewegt.

Weitere Ausführungsformen, die als Weiterbildung der Erfindung Verwendung finden können, betreffen einen Bewegungssimulator und zwar insbesondere dessen Rotationseinheit. Diese besteht aus mindestens drei Rotationselementen, wobei benachbarte Elemente untereinander drehbar verbunden sind. Das erste Rotationselement ist drehbar an weiteren Vorrichtungen gelagert, wie an Mitteln einer Translationseinheit. An dem letzten, wie beispielsweise dem dritten Rotationselement ist ein Exoskelett oder dergleichen drehbar gelagert. Dieser Vorrichtung liegen folgende Erkenntnisse zugrunde.

Exoskelette für die Teleoperation, also zur Kontrolle von Statthaltern in einer virtuellen (Avatare) oder realen Umgebung (humanoide Roboter), benutzen Bewegungssimulatoren um statische oder zeitlich veränderliche Körperbeschleunigungen auf den Nutzer auszuüben. Dazu werden auch kardanische Aufhängungen (engl.: gimbal) eingesetzt.

Dazu sind insbesondere Systeme mit vier unabhängigen Achsen nötig, um den Effekt des "gimbal lock" zu vermeiden. Dieser Zustand tritt auf, wenn bei bestimmten Stellungen der Achsen zueinander, besonders im Falle von zueinander parallelen Achsen oder wenn mehr als zwei Achsen in einer gemeinsamen Ebene liegen, Freiheitsgrade verloren gehen. In der Nähe dieser Zustände können die nötigen Stellgeschwindigkeiten der Achsen sehr hoch oder beliebig hoch werden um von einer Orientierung des Nutzers, auch langsam, zu einer anderen überzugehen.

Bei kardanischen Aufhängungen mit nur drei Achsen kann dieser Effekt es technisch und praktisch unmöglich machen, dass der Nutzer, gesteuert durch die Elektronik des Bewegungssimulators, bestimmte Bereiche von Orientierungen im Raum einnehmen kann, um eine geeignete Raumlage oder einen Beschleunigungseindruck zu erfahren.

Wenn vier Achsen verwendet werden, können diese geeignet gesteuert werden, so dass stets drei Freiheitsgrade verfügbar sind, und keine extremen Geschwindigkeiten oder Beschleunigungen nötig sind. Ein solches System besteht im Allgemeinen aus 3 Elementen welche jeweils über 2 Achsen und zusammen über 4 unabhängige Achsen verfügen. Ein solches System ist im Allgemeinen größer und schwerer als eines mit nur 3 Achsen. Dies trifft ins besonders dann zu, wenn jedes Element einen Vollkreis oder Halbkreis umschreibt. Diese Elemente sind dann auch besonders träge und widerstehen rotatorischen und translatorischen Beschleunigungen. Entsprechendes gilt für elliptische oder andere Formen mit großen Winkelabständen. Außerdem addieren sich Fehler in den Stellwinkeln besonders, wenn die Achsen jedes Elements große Winkel zueinander einnehmen. Diese Winkel werden in der Regel als 90° gewählt. Es ist besonders dann wichtig, wenn das innerste Element einen Voll- oder Halbkreis ähneln sollte, dass es groß genug im Durchmesser ist, dass der Nutzer nie damit kollidieren kann.

Bei dem Bewegungssimulator ist eine besondere kardanische Aufhängung enthalten. Die Summe der Elementwinkel (Winkel der zwei Achsen eines Elements zueinander) muss größer als 180° sein, um einen gimbal lock zu vermeiden und um zu erlauben, dass der Nutzer im Exoskelett, alle möglichen räumlichen Orientierungen einnehmen kann.

Die Bewegungsplattform kann zusammen mit der zuvor beschriebenen erfindungsgemäßen Vorrichtung verwendet werden.

Weitere Einzelheiten und Vorteile der vorliegenden Erfindung werden im Folgenden anhand von bevorzugten Ausführungsbeispielen mit zugehörigen Abbildungen erläutert. Dabei zeigen:

Fig. 1        eine perspektivische Darstellung von einem Exoskelett 1000
Fig. 2        eine Draufsicht auf das Exoskelett 1000
Fig. 3 - 5    Veranschaulichung verschiedener Winkel bei Exoskelett 1000
Fig. 6 - 11   verschiedene Darstellungen von Exoskelett 1001

Fig. 12 - 17  verschiedene Darstellungen von Exoskelett 1002
Fig. 18 - 23  verschiedene Darstellungen von Exoskelett 1003
Fig. 24 - 26  verschiedene Darstellungen des geteilten zweiten Elements (82a-c)
Fig. 27 - 30  verschiedene Darstellungen des Bewegungssimulators 3000
Fig. 31       das Exoskelett 203 mit Rückenhalterung
Fig. 32 - 35  verschiedene Darstellungen des Fußes 9000

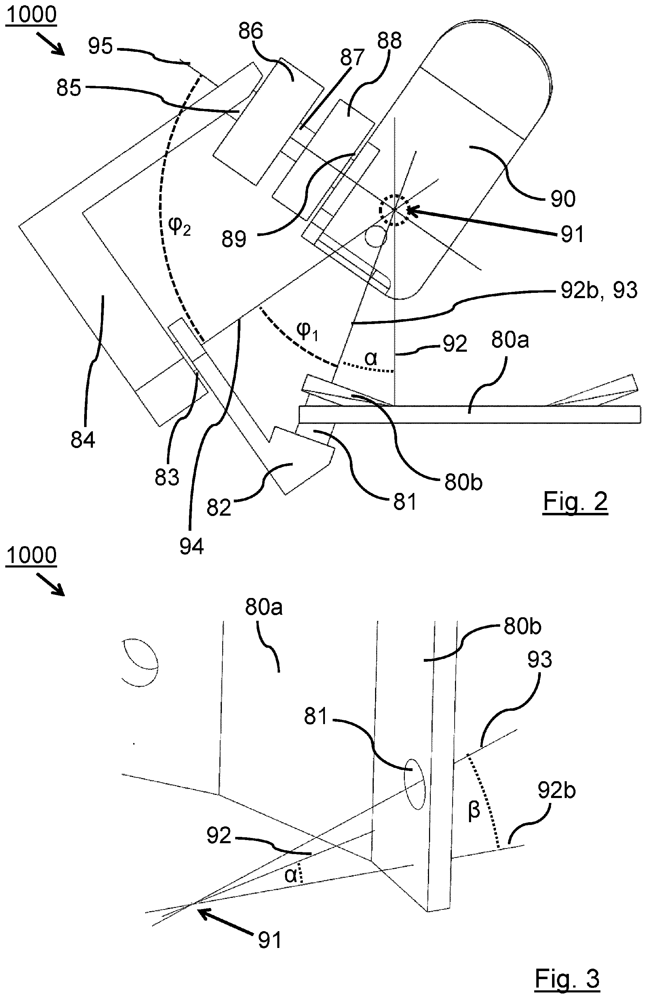

Fig. 1 zeigt eine perspektivische Darstellung eines bevorzugten Ausführungsbeispiels für ein Exoskelett 1000. Dieses enthält ein erstes Element 80a, das auch Exo-Rückenplatte genannt wird und im Normalbetrieb fest relativ zum Hüftknochen eines Nutzers befestigt wird. Diese Exo-Rückenplatte 80a enthält im unteren Bereich auf jeder Seite je eine Achsbefestigungsregion 80b, die hier schräg nach innen gewölbt sind und auch als Befestigungselemente 80b bezeichnet werden. An jedem dieser Befestigungselemente 80b ist ein zweites Element 82 mittels eines Schaftes 81 drehbar befestigt. Über einen weiteren Schaft 83 (s. Fig. 2) ist ein drittes Element 84, bestehend aus den beiden Schenkeln 84a, 84b, mit dem zweiten Element 82 drehbar verbunden. Da die beiden Elemente 82, 84 die wesentlichen Funktionen eines Hüftgelenkes übernehmen, werden sie auch als erstes Exo-Hüftgelenk 82 bzw. als zweites Hüftgelenk 84 bezeichnet. Über einen weiteren Schaft 85 ist ein viertes Element 86 mit dem zweiten Exo-Hüftgelenk 84 drehbar verbunden, das auch als Exo-Oberschenkel bezeichnet wird. Unterhalb davon befindet sich ein fünftes Element 88, das auch als Exo-Unterschenkel bezeichnet wird und über einen Schaft 87 mit dem Exo-Oberschenkel 86 drehbar verbunden ist. Unterhalb davon ist ein fünftes Element 90, auch als Exo-Fuß bezeichnet, mittels eines Scharniergelenkes 89 drehbar mit dem Exo-Unterschenkel 88 verbunden.

Es sei darauf hingewiesen, dass das Exo-Skelett 1000 insofern spiegel-symmetrisch ist, als es die genannten Elemente, wie Exo-Hüftgelenk 82, 84, Exo-Oberschenkel 86, Exo-Unterschenkel 88 und Exo-Fuß 90 sowie die zugehörigen Gelenke 81, 83, 85, 87, 89, jeweils zwei Mal aufweist, nämlich je einmal auf der rechten und auf der linken Seite. Aufgrund der Anordnung der Exo-Füße 90 (Spitzen nach links unten) ist die übliche Vorwärts-Gehrichtung erkennbar. Diese ist bei dieser und auch bei folgenden Abbildungen für die Bezeichnungen "rechts" und "links" maßgeblich. Zur Verdeutlichung ist in Fig. 1 entsprechend "rechte Seite" und "linke Seite" angegeben. Es sei ferner darauf hingewiesen, dass bei den hier beschriebenen Ausführungsformen das erste Element 80a, 80b sowohl die Funktion als Exo-Rückenplatte als auch die Funktion als Exo-Hüftplatte aufweist. Deshalb werden hier beide Begriffe "Hüftplatte" bzw. "Rückenplatte" gleichermaßen verwendet. In anderen Ausführungsformen, auf die hier nicht näher eingegangen wird, kann wenigstens eine separate Rückenplatte vorgesehen sein, um den Rücken zu aktuieren. Dann kann sich die Hüfte durch Änderung des Gelenkwinkels zwischen Hüfte und Wirbelsäule relativ zum Rücken bewegen.

Fig. 2 zeigt eine Draufsicht auf das Exoskelett 1000, wobei insbesondere dessen Elemente dargestellt sind, die sich auf dessen linker Seite befinden. Neben den beschriebenen Elementen sind in Fig. 1 und 2 auch einige Achsen eingezeichnet, die sich insbesondere aufgrund der Anordnungen der Schäfte 81, 83, 85, 87 und 89 ergeben. Darauf wird im Folgenden näher eingegangen.

Wie in Fig. 1 und 2 dargestellt, verläuft eine erste Achse 93 durch den Schaft 81, so dass das erste Exo-Hüftgelenk 82 bezogen auf die Rückenplatte 80a bzw. das zugehörige rechte bzw. linke Befestigungselement 80b um die erste Achse 93 drehbar ist. In Fig. 1 ist die erste Achse 93 sowohl rechts als auch links gekennzeichnet. Weitere Achsen sind in Fig. 1, 2 üblicherweise nur auf der rechten oder der linken Seite eingezeichnet bzw. markiert - und zwar abhängig davon, wo die entsprechende Achse am besten erkennbar ist. Eine zweite Achse 94 ist durch die Anordnung des Schaftes 83 definiert. Dadurch kann sich das zweite Exo-Hüftgelenk 84 bezüglich des zugehörigen ersten Exo-Hüftgelenks 82 um diese Achse 94 drehen. Eine dritte Achse 95 ist durch die Anordnung des Schaftes 85 definiert. Dadurch kann sich der Exo-Oberschenkel 86 bezüglich des zugehörigen zweiten Exo-Hüftgelenks um die dritte Achse 95 drehen. Entsprechend sind

- eine vierte Achse 96 zwischen dem Exo-Oberschenkel 86 und dem Exo-Unterschenkel 88 aufgrund der Anordnung des Schaftes 87 und
- eine fünfte Achse 97 zwischen dem Exo-Unterschenkel 88 und dem Exo-Fuß 90 aufgrund des Schaftes 89

festgelegt.

Die vierte Achse 96 liegt in Neutralstellung (gerade, aufrechte Körperhaltung; so wie in Fig. 1 dargestellt) parallel oder nahezu parallel zur mediolateralen Achse oder Achse des Knies des Nutzers und führt durch dessen Kniegelenk.

Die fünfte Achse 97 liegt in Neutralstellung (s. Fig. 1) parallel oder nahezu parallel zur mediolateralen Achse oder der Achse des Sprunggelenks und führt durch das menschliche Sprunggelenk.

Wie aus Fig. 1 und 2 erkennbar, sind die Schäfte 81, 83, 85 derart angeordnet, dass die zugehörigen Achsen 93, 94, 95 durch einen Punkt 91 auf der rechten Seite bzw. einen Punkt 91 auf der linken Seite verlaufen (dieser ist in Fig. 2 auch durch einen gestrichelten Kreis umrandet). Diese Punkte 91 stellen die Mittelpunkte des rechten bzw. linken Hüftgelenks dar. In Fig. 1, 2 ist sowohl auf der rechten Seite als auch auf der linken Seite außerdem eine weitere Achse 92 eingezeichnet. Diese ist dadurch definiert, dass sie einerseits durch den Mittelpunkt 91 des zugehörigen rechten bzw. linken Hüftgelenks und andererseits parallel zur Sagitalachse verläuft. Die Achsen 92, 93, 94, 95 bzw. die zugehörigen Gelenke sind außerdem derart gestaltet und angeordnet, dass zwischen der ersten Achse 93 und der zweiten Achse 94 ein Winkel $\varphi_1$ und zwischen der der zweiten Achse 94 und der dritten Achse 95 ein Winkel $\varphi_2$ definiert wird. Außerdem kann die erste Achse 93 mit der Achse 92 unter bestimmten Voraussetzungen einen Winkel $\alpha$ bilden (s. Fig. 2), worauf weiter unten näher eingegangen wird.

Die Anordnung der Achsen 93, 94 und 95 bzw. der zugehörigen Gelenke bildet den Kern des Exo-Hüftgelenks. Diese Achsen sind drei voneinander unabhängige Drehachsen, welche sich allesamt im Zentrum 91 des Hüftgelenks des Nutzers schneiden. Sie bilden so eine kardanische Aufhängung (englisch: gimbal) mit dem Zentrum des Hüftgelenks als Mittelpunkt.

Die Achsen 93, 94, 95 dieser kardanischen Aufhängung müssen nicht rechtwinklig zueinander stehen. Dies ist auch, abhängig vom geforderten Arbeitsraum des Mechanismus oder der gewünschten Art der Aktuierung, nicht immer möglich oder wünschenswert.

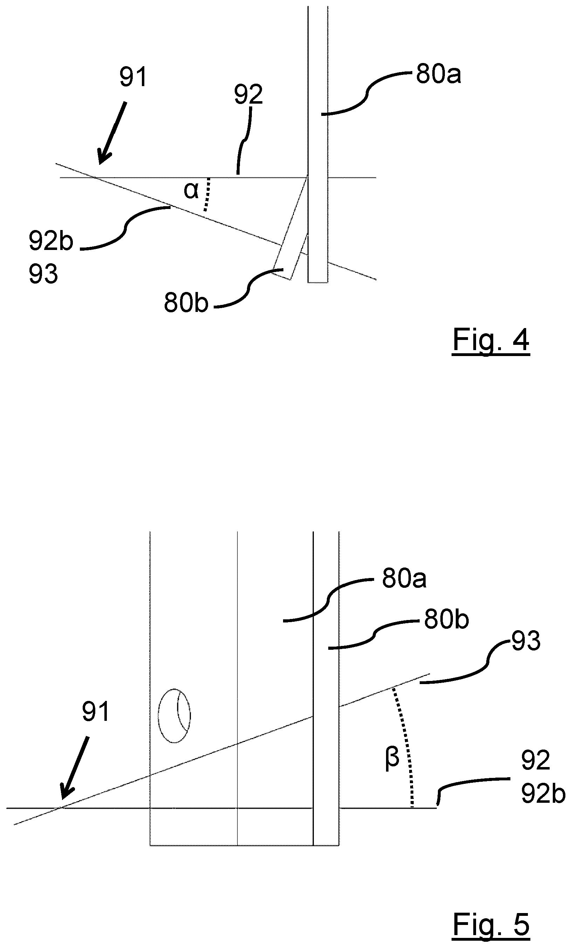

Die erste Achse 93 kann relativ zur Hüfte des Nutzers, oder äquivalent zu der Exo-Hüfte, je nach gewünschter Anwendung und Notwendigkeit, im Raum durch die Winkel $\alpha$ und $\beta$, oder eine äquivalente Transformation, orientiert werden, wie in Fig. 3-5 dargestellt. Die erste Achse 93 verläuft jedoch immer durch den Mittelpunkt 91 des Hüftgelenks des Nutzers. Dazu muss der Abstand der Exo-Hüfte zum Nutzer entsprechend justiert werden. Für $\alpha=\beta=0$ liegt die erste Achse 93 parallel zur Sagitalachse und läuft durch den Mittelpunkt des Hüftgelenks 91. Für $\alpha$ und/oder $\beta$ ungleich Null erfolgt zunächst eine Rotation mit dem Winkel $\alpha$ um die Vertikalachse und dann eine Rotation mit den Winkel $\beta$ um einen Vektor mit Aufpunkt in 91, welcher senkrecht zur Ebene steht, welche die Transversalebene senkrecht schneidet und durch 92b läuft (entsprechend Fig. 4).

Die bisherigen Figuren dienen hauptsächlich dazu, das Prinzip der vorliegenden Erfindung zu erläutern. In den folgenden Figuren sind mehrere Ausführungsbeispiele dargestellt. Aus Gründen der Übersichtlichkeit sind dabei die Referenzzeichen nur insoweit eingezeichnet, wie sie für das Verständnis notwendig sind.

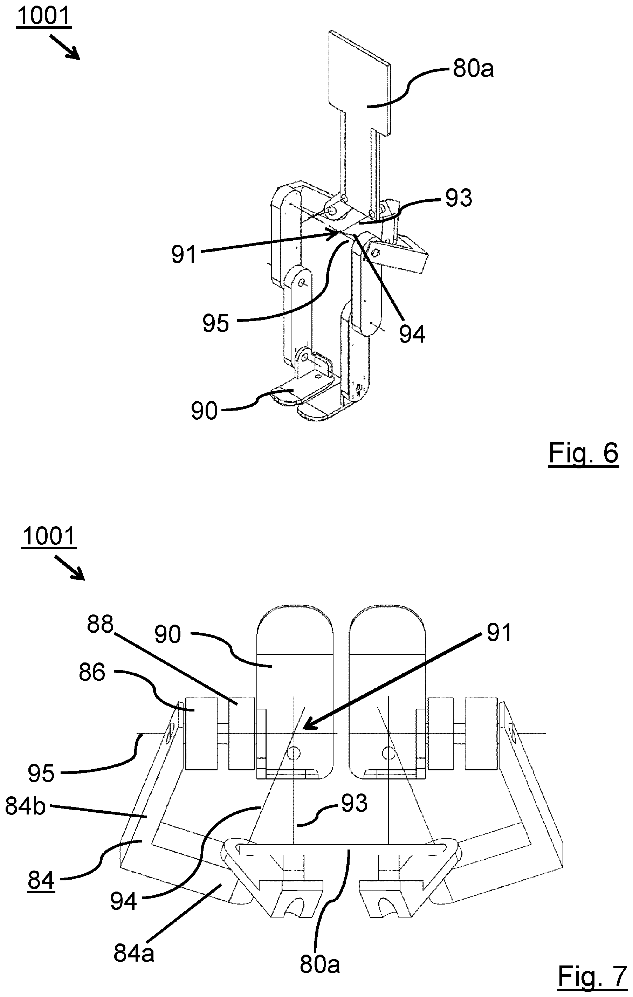

In Fig. 6 - 11 ist ein erstes bevorzugtes Ausführungsbeispiel abgebildet. Hier stehen die ersten Achsen 93 der linken und rechten Seite beide rechtwinklig auf dem ersten Element 80a, sind parallel zur Sagitalachse und führen durch die Zentren der Oberschenkelköpfe. Durch alleinige Aktuation um diese ersten Achsen 93 wird somit eine reine Abduktion und Adduktion des Oberschenkels ermöglicht. Bei dem ersten Ausführungsbeispiel haben die Winkel folgende Werte:

$$\varphi_1 = 35 \text{ Grad}; \ \varphi_2 = 70 \text{ Grad}; \ \alpha = 0 \text{ Grad}; \ \beta = 0 \text{ Grad}.$$

Fig. 6 und 7 zeigen verschiedene Ansichten eines Exoskeletts 1001 nach dem ersten Ausführungsbeispiel, wobei eine neutrale Haltung dargestellt ist.

Dabei stehen die dritten Achsen 95 in der neutralen Haltung parallel zur mediolateralen Achse. Sie sind somit für die reine Flexion und Extension des Oberschenkels verantwortlich.

Die Wahl der dritten Achse 95 in dieser Richtung erleichtert die Aktuierung des Oberschenkels beim Gehen oder Laufen. Hier wird dann auch die meiste Arbeit geleistet und es liegen die größten Winkeländerungen vor.

Die vierte Achse 96 und die fünfte Achse 97 stehen in der neutralen Haltung parallel zur mediolateralen Achse. Sie sind somit für die reine Flexion und Extension des Unterschenkels (vierte Achse 96) oder des Fußes (fünfte Achse 96) verantwortlich.

Die Wahl der Lage der zweiten Achse 94 ist nicht trivial. Sie kann, für eine Anwendung im Gehen, Stehen und Laufen, nicht senkrecht durch das Hüftgelenk verlaufen (dann lägen alle drei Achsen in der neutralen Haltung rechtwinklig zueinander), da ein Scharniergelenk dann entweder im Oberkörper oder im Oberschenkel verortet sein müsste.

In den Figuren 6 - 11 wurde die zweite Achse 94 so gewählt, dass ihr Gelenk unterhalb des Gelenkkopfes, hinter dem Nutzer, und auswärts angebracht wurde. Der Winkel zwischen der ersten Achse 93 und der zweiten Achse 94 beträgt $\varphi_1=35°$. Der Winkel zwischen der zweiten Achse 94 und der dritten Achse 95 beträgt $\varphi_2=70°$. In dieser Anordnung, mit Achse 93 parallel zur Sagitalachse, und mit der dritten Achse 95 der Hüfte, der vierten Achse 96 des Knies und der fünften Achse 97 des Fußes 90 parallel zur Transveralachse, ergibt sich aus der Winkelsumme von $\varphi_1+ \varphi_2=105°$ die maximale Innendrehung des Beines von $\varphi_1+ \varphi_2-90°=105°-90°=15°$. Dann liegen alle Achsen 93-95 gleichzeitig in einer Ebene parallel zur Transversalebene. Die maximale Drehung des Beins um die vertikale Achse ist nicht so einfach zu bestimmen und hängt im Wesentlichen von der Form und Größe der Elemente 80, 82, 84 ab. Wird angenommen, dass sich die einzelnen Teile durchdringen können, bzw. so gebaut sein sollten, dass sie sich nicht durchdringen oder miteinander kollidieren, dann beträgt die maximale Außendrehung des Fußes 90 im zuletzt beschriebenen Fall also

$$- \varphi_1 + \varphi_2 - 90° = -35° + 70° - 90° = -55°.$$

Die Differenz zwischen maximaler Innen- und Außendrehung beträgt $2 \cdot \varphi_1 = 70°$.

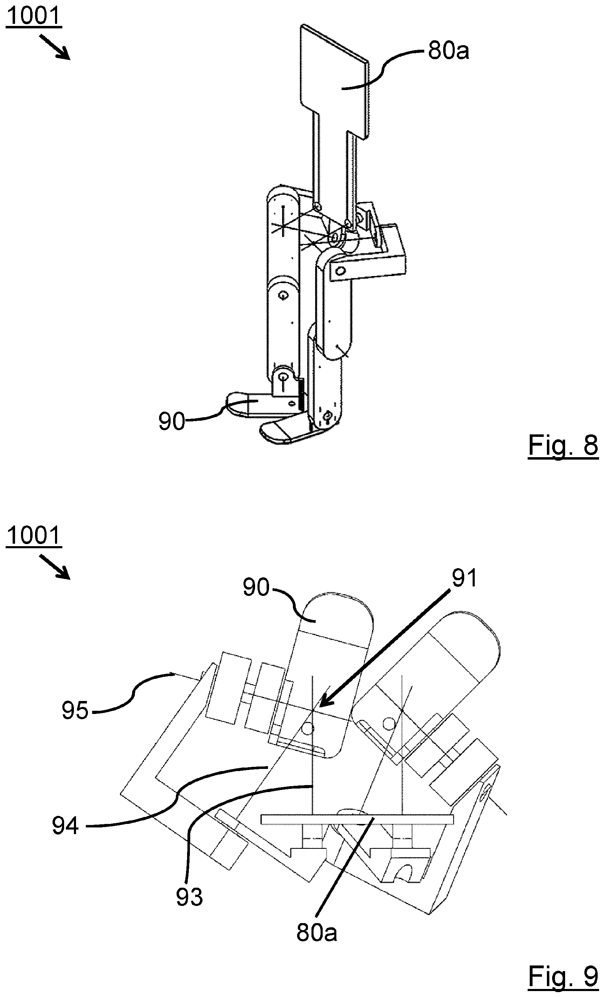

Fig. 8 und 9 zeigen verschiedene Perspektiven des ersten Ausführungsbeispiels mit maximaler Innendrehung von 15 Grad und maximaler Außendrehung von ca. 45 Grad.

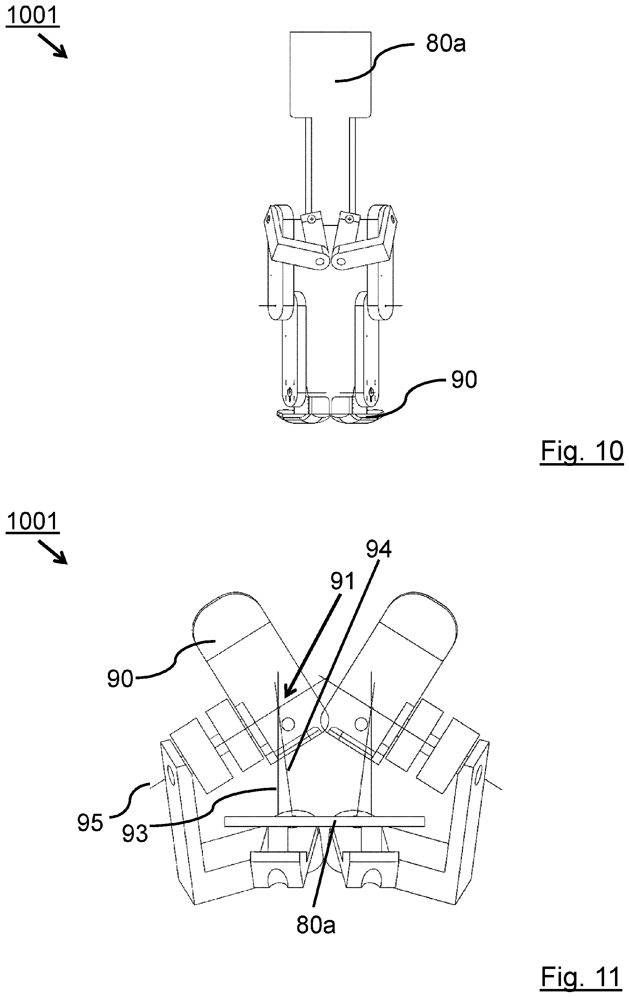

Fig. 10 und 11 zeigen ebenfalls verschiedene Perspektiven des ersten Ausführungsbeispiels mit einer maximalen simultanen Außendrehung von ca. 32 Grad.

Das erste Ausführungsbeispiel ist die bevorzugte Ausführung. Sie ermöglicht fast jede, auch extreme Körperhaltungen und Bewegungen. Das umfasst Gehen, Laufen, Rennen, Springen, Kehrtwende auf der Stelle, tiefen Ausfallschritt, Seitschritte, Überkreuzschritte, Nahkampf, Sitzen auf Stühlen oder Bänken und anderes. Der Aufbau 1 ermöglicht eine weite Amplitude der Außendrehung der Füße (45° Außendrehung, 15° Innendrehung). Es lassen sich gemäß der Notwendigkeiten einer Anwendung andere Aufbauten realisieren.

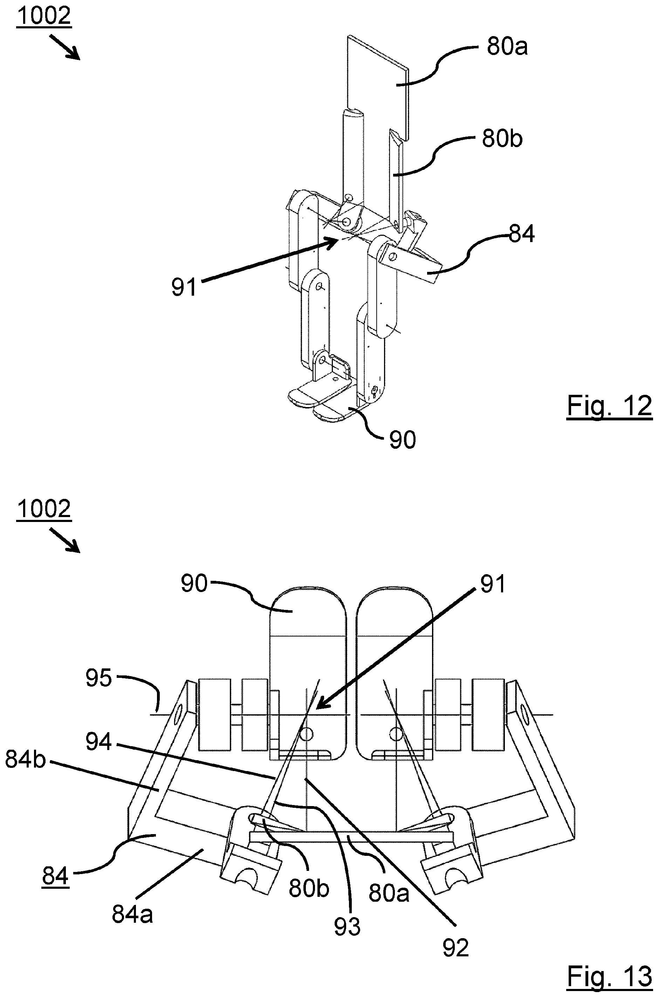

Wie bereits oben erwähnt, muss die erste Achse 93 nicht unbedingt parallel zur Sagitalachse verlaufen. Insbesondere kann es nützlich sein, sie um die Vertikalachse so zu drehen, dass die Drehung der Füße nach innen um die Vertikalachse über einen größeren Bereich möglich wird. Darauf bezieht sich das zweite Ausführungsbeispiel, das mithilfe der Figuren 12 - 17 beschrieben wird und das folgende Winkel aufweist:

$$\varphi_1 = 35\ \text{Grad};\ \varphi_2 = 70\ \text{Grad};\ \alpha = 20\ \text{Grad};\ \beta = 0\ \text{Grad}.$$

Fig. 12 und 13 zeigen ein Exoskelett 1002 gemäß dem zweiten Ausführungsbeispiels in neutraler Haltung.

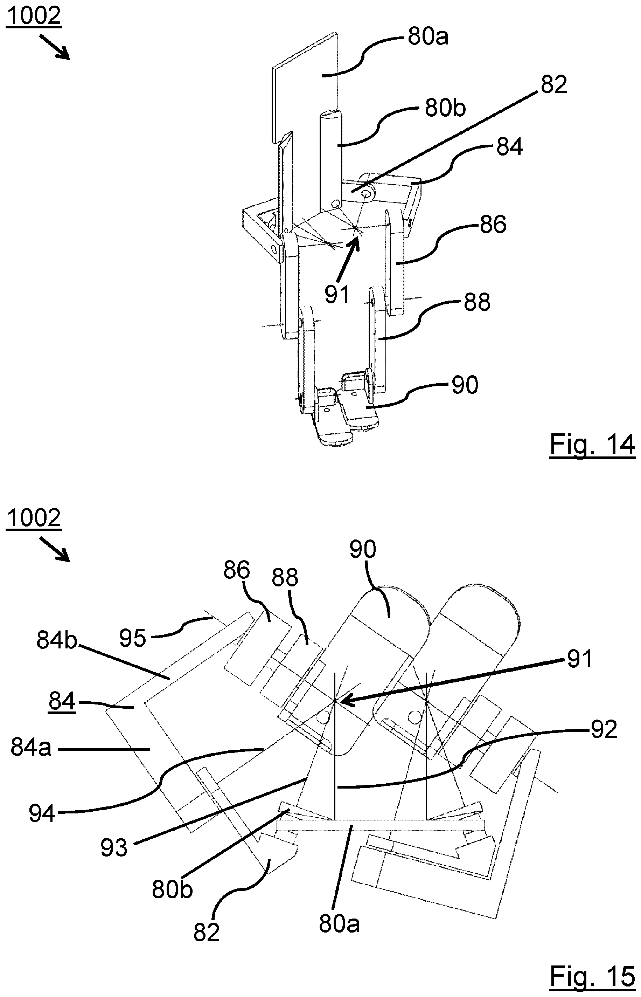

Fig. 14 und 15 zeigen das Exoskelett 1002 mit maximaler Innendrehung von 35 Grad und maximaler Außendrehung von 35 Grad.

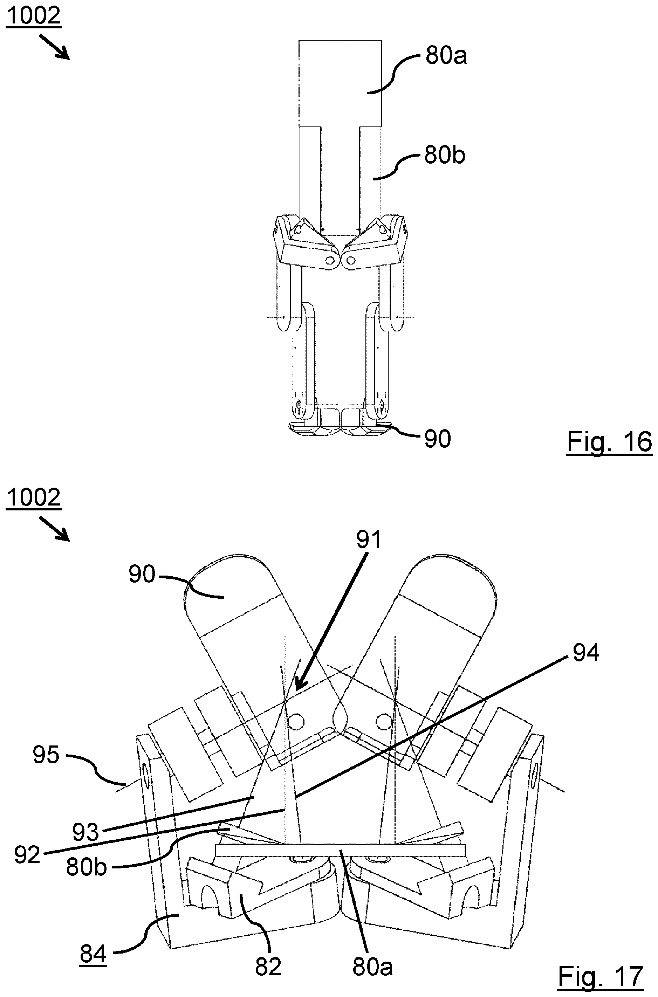

Fig. 16 und 17 zeigen das Exoskelett 1002 mit maximaler simultaner Außendrehung von ca. 28 Grad.

Das zweite Ausführungsbeispiel demonstriert, wie durch Wahl eines $\alpha > 0°$ die maximale Innendrehung des Fußes 90 erhöht werden kann. Außerdem sieht man in Fig. 15, dass der maximale Verfahrbereich des zweiten Elements 82 erhöht wird, und somit auch das theoretische Maximum der Außendrehung des Fußes 90 erreichbar wird. Im ersten Ausführungsbeispiel war diese Drehung noch dadurch begrenzt, dass das zweite Element 82 mit dem Element 1 kollidieren konnte. Somit wurden statt der theoretisch maximalen Außendrehung von 55° nur 45° erzielt. Das zweite Ausführungsbeispiel ermöglicht es daher, z.B. schneller, bei vollem Bodenkontakt ohne Gleiten, die Gehrichtung zu wechseln als das erste Ausführungsbeispiel.

Bei dem Exoskelett 1002 wird jedoch automatisch auch die maximale Drehung der Füße 90 um die Vertikalachse nach außen um den gleichen Betrag verringert. Bei der Drehung nach Außen ist die Quantifizierung des maximalen Winkels wieder abhängig von der Größe und Beschaffenheit besonders der Elemente 80a, 82, 84, da sie, abhängig von den gewählten Winkeln und Ihrer spezifischen sonstigen Geometrie, kollidieren können. Dies ist bei dem zweiten Ausführungsbeispiel jedoch nicht der Fall (siehe insbesondere Figur 15, rechtes Bein). Die maximal mögliche Drehung des Fußes nach innen und außen beträgt hier jeweils 35°.

Um eine möglichst weite Abduktion des Oberschenkels zu erlauben ist es nötig, einen lateralen Abstand zwischen dem Oberschenkel oder der Hüfte des Nutzers und der nächsten Bauteile an der dritten Achse 95 einzuhalten. Diese Teile drehen sich bei Abduktion des Beines, also einer Drehung vorwiegend um die erste Achse 93, kreisförmig um den Mittelpunkt des Kopfes des Femur. Diese Kreise schneiden auch die Teile des Oberkörpers (Hüfte und aufwärts). Je größer der Radius dieser Kreise zwischen Zentrum des Hüftgelenks und innersten Teil entlang der dritten Achse 95 ist, desto größer ist der maximale Abduktionswinkel des Beines. Ebenso sollte die Exo-Platte 80a schmal (in lateraler Richtung) gehalten werden, so dass sie bei weiter Abduktion des Beines nicht mit dem dritten Element 84 in Konflikt gerät.

Der Exo-Oberschenkel 86 ist in der bevorzugten Ausführungsform an der Außenseite des Beins des Nutzers angebracht. Das dritte Element 84 ist entlang der dritten Achse 95 dann distal an dem Exo-Oberschenkel 86 befestigt. Das heißt der Oberschenkel ist innen in der kardanischen Aufhängung befestigt. Dann ist es einfach den Oberschenkel des Nutzers daran ohne zu großen Abstand zu befestigen. Der Exo-Oberschenkel 86 hat dann in der Schwungrichtung nach hinten auch automatisch einen Anschlag an dem zweiten Element 82 oder an dem dritten Element 84, so dass eine Überdrehung verhindert werden kann. Sollte jedoch ein besonders großer Abstand zwischen Nutzer und Exoskelett in dem Bereich der dritten Achse 95 nötig sein, um z.B. eine besonders große Abduktion des Beines zu ermöglichen, kann der Oberschenkel auch außen am dritten Element 84 angebracht werden.

Die Elemente 82 und 84, welche die Klammern der kardanischen Aufhängung (gimbal) sind, sind bevorzugt so ausgelegt, dass das innere Element kleiner ist als das äußere Element, und zwar in der Art, dass das innere Element bei extremen Winkeln und Außendrehung des Fußes 90 nicht dem äußeren Element kollidiert und so den Bewegungsfreiraum eingrenzt. Die Elemente 82, 84 sind bevorzugt als "Klammern" ausgelegt, können jedoch auch kreisbogenförmig ausgelegt werden, so dass sie mehr den Elementen einer typischen kardanischen Aufhängung ähneln.

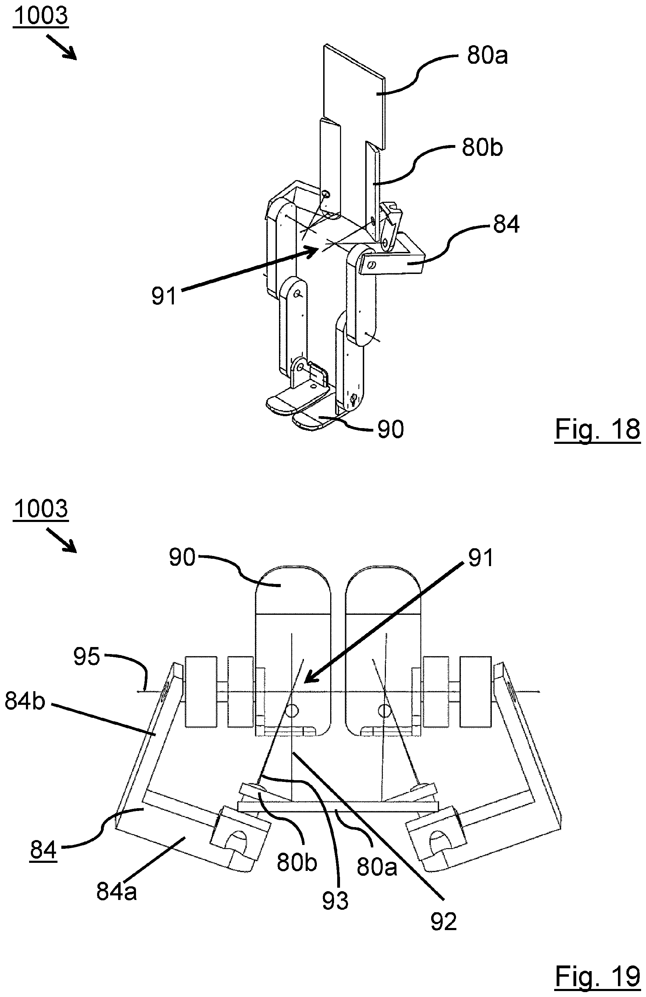

In den Figuren 18 - 23 ist ein weiteres Exoskelett 1003 gemäß einem dritten Ausführungsbeispiels abgebildet. Dieses hat folgende Winkel:

$$\varphi_1 = 35°,\ \varphi_2 = 70°,\ \alpha = 20°,\ \beta = 20°.$$

Dabei zeigen Fig. 18 und 19 das Exoskelett 1003 in neutraler Haltung.

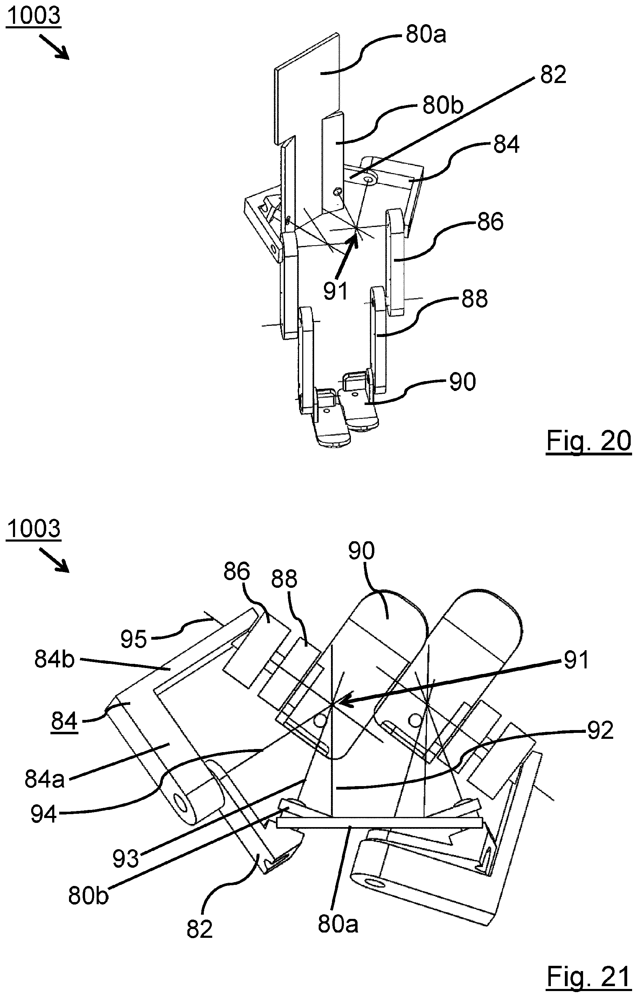

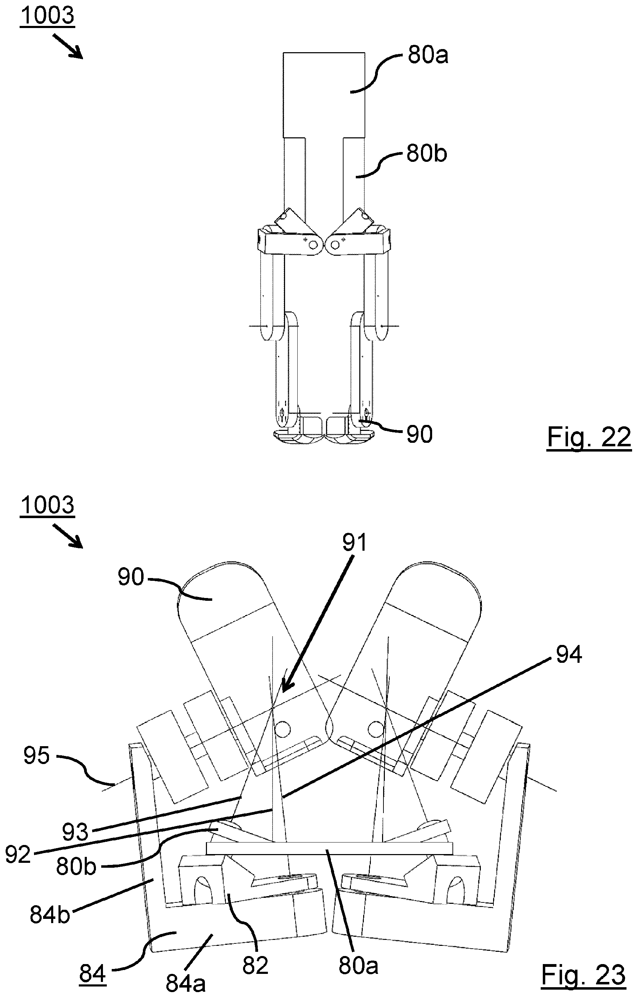

Fig. 20 und 21 zeigen das Exoskelett 1003 mit maximaler Innendrehung von 33 Grad und maximaler Außendrehung von ca. 37 Grad. Dazu wird darauf hingewiesen, dass die Exo-Rückenplatte 82 unten kürzer sein kann als hier gezeigt. Fig. 22 und 23 zeigen das Exoskelett 1003 mit maximaler simultaner Außendrehung von ca. 26 Grad.

Durch das angehobene zweite Element 82 ermöglicht das Exoskelett 1003 dieses Ausführungsbeispiels im Prinzip weitere Schritte als bei den vorigen Ausführungsbeispielen. Diese weiteren Schritte werden jedoch üblicherweise nicht mehr durch den natürlichen Arbeitsraum der meisten Menschen abgedeckt. Der geschaffene Platz hinten an den Beinen des Nutzers erlaubt jedoch auch an den Oberschenkeln des Nutzers weitere Einrichtungen, wie taktile Elemente oder Panzerung anzubringen. Für mobile Anwendungen ist dieser Aufbau interessant, da Sitzen noch weiter erleichtert wird und das Risiko mit der Umwelt zu kollidieren reduziert wird. Auch erlaubt der Aufbau z.B. tieferes Knien, ohne dass die Füße 90 des Exoskeletts mit den Hüftelementen kollidieren.

Die bisher beschriebenen Ausführungsbeispiele sind bevorzugt. Dennoch gibt es eine Vielzahl von weiteren Ausgestaltungen, die sich auf alle bisher beschriebenen Ausführungsbeispiele beziehen. Auf einige solche Weiterbildungen wird im Folgenden kurz eingegangen.

Bei den bisherigen Ausführungsbeispielen sind die Elemente 82 und 84 derart gestaltet, dass zwischen der ersten Achse 93 und der dritten Achse 95 nur eine weitere Achse vorgesehen ist, nämlich die zweite Achse 94, die sich aufgrund des Gelenks 83 zwischen den Elementen 82 und 84 ergibt. Es ist auch möglich, nicht nur eine zweite Achse 94 zwischen beibehaltenen Achsen 93 und 95 zu verwenden, sondern unter Verwendung von mehr als 2 Klammern oder Bögen zusätzliche Achsen (z.B. Achsen 94a, 94b, usw.) einzuführen. Besonders wenn sich alle oder einige dieser Elemente ganz ineinander falten lassen, hat dies den Vorteil, dass der Unterschied zwischen maximaler Innendrehung und maximaler Außendrehung des zugehörigen Fußes 90 vergrößert werden kann. Dadurch lassen sich größere Winkelbereiche der Innen- und Außendrehung des Fußes 90 abdecken.

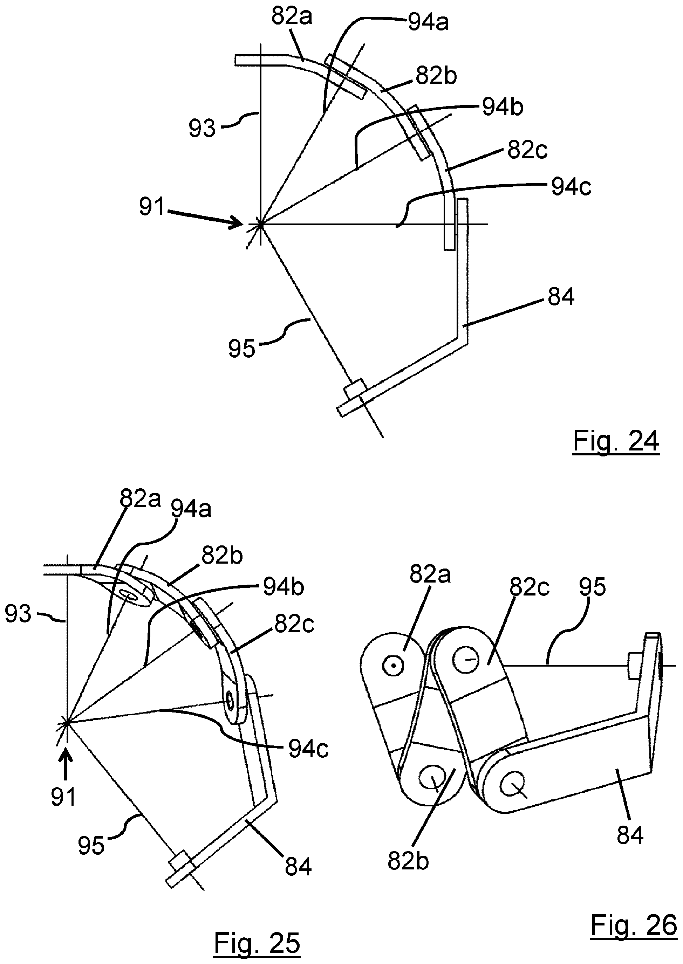

Die Fig. 24 - 26 zeigen verschiedene Perspektiven eines solchen Beispiels, bei dem das Element 82 unterteilt ist in drei Teile, die hier als 82a, 82b und 82c bezeichnet sind. Jeder dieser Teile ist drehbar mit seinem Nachbarteil verbunden, wodurch sich die Achsen 94a, 94b und 94 c ergeben. Vorzugweise ist jede Achse aktuiert. Dies kann auch durch Aktuatoren an den nicht gezeigten Elementen 80 oder 86 geschehen. Die kleineren Elemente decken in dem Beispiel einen Winkel von je 30° und das größere einen Winkel von 60° ab. Ein Fuß ließe sich mit diesem Aufbau (mittels der externen oder internen Rotation des Hüftgelenkes) gleichermaßen um 60° nach innen wie nach außen drehen (für eine Hüftplatte mit $\alpha=\beta=0°$). Es ist möglich die Elemente 81, 82a, 82b, 82c, etc., 84, 86 in beliebiger Reihenfolge innen oder außen aneinander zu befestigen. Außerdem können die Winkel $\varphi_i$ der Elemente voneinander unterschiedlich sein. Elemente 82-84, welche wie in dem Beispiel gemäß der Fig. 24 - 26 von innen nach außen angeordnet sind, können sich nie, unabhängig von den genutzten Winkeln $\varphi_i$ schneiden. Sollten jedoch zumindest einzelne der Elemente von außen nach innen angeordnet sein, kann ein Sich-Schneiden verhindert werden, wenn das nächste Element (z.B. ist Element 82c das nächste Element von 82b) einen deutlich kleineren Winkel abdeckt, als das vorherige Element. Es ist auch möglich, dass das Element 82a außerhalb von folgenden Elementen 82b, usw. liegt aber als erstes an dem Element 80 befestigt ist. Durch einzelne dieser Maßnahmen oder durch deren Kombination kann verhindert werden, dass der Durchmesser des gesamten Hüftgelenkes mit zunehmender Anzahl der Elemente zu sehr wächst.

Durch die Verwendung von mehr als 3 Achsen für das Hüftgelenk gibt es im Allgemeinen keine eindeutige Zuordnung mehr für die Wahl der angetriebenen Achswinkel (Gelenkwinkel). Es ist jedoch bevorzugt, den Winkel zwischen Achse 93 und Achse 95 tabellarisch oder funktional ein-eindeutig mit einem Vektor der zu aktivierenden Winkel (Gelenkwinkel) der Achsen 94a, 94b, usw. zu korrelieren. Dadurch wird ein sicheres und vorhersagbares Verhalten des Mechanismus erzielt. Im Allgemeinen ist es nötig, dass das Element 84 nicht zu weit aus der Horizontalen abweicht. Dadurch würde das freie Schwingen des Beins behindert. In Fig. 26 sieht man, wie die interne Rotation des Hüftgelenkes durch eine Akkordeon-artige Entfaltung der Elemente 82a, 82b, 82c vergrößert wird. Diese Art der Aktuation kann auch in die andere Richtung betrieben werden, um eine externe Rotation der Hüfte zu vergrößern. Dabei kann es jedoch vorkommen. dass die Hüftelemente des linken und des rechten Beines leicht miteinander in Konflikt geraten.

Es ist im Allgemeinen wichtig, dass das letzte Element (hier 84), an dem der Exo-Oberschenkel 86 befestigt wird, in allen Zuständen des Hüftgelenkmechanismus erlaubt, den Exo-Oberschenkel 86 während des Ganges schwingen zu lassen. Da in den bevorzugten Ausführungsbeispielen der Exo-Oberschenkel 86 innen an dem dritten Element 84 befestigt ist, ist vorzugsweise der Bereich der dritten Achse 95 des Elementes 84 an der Innenseite eben ausgeführt. Dies entspricht den hier benutzten Darstellungen. Dennoch kann Element 84 rund sein, insbesondere dann, wenn der Exo-Oberschenkel 86 außen befestigt werden sollte, oder wenn der Abstand zwischen Exo-Oberschenkel 86 und Element 84, entlang der dritten Achse 95 so groß sein sollte, dass ein freier Schwung des Exo-Oberschenkels 86 nicht erheblich eingeschränkt werden sollte.

Durch eine besonders breite Wahl der Hüftelemente, bevorzugt als Segmente von Kugelschalen, kann der Hüftmechanismus noch stärker einem faltbaren Teil einer Kugelschale entsprechen. Dies kann z.B. als Schutz oder Panzerung genutzt werden.

Bei den gezeigten Ausführungsformen des Exoskeletts 1000, 1001, 1002, 1003 ist das dritte Element 84 derart ausgebildet, dass die beiden Schenkel 84, 84b nahezu senkrecht zueinander angeordnet sind. Das führt dazu, dass das dritte Element 84 bei den verschiedenen Bewegungen seitlich recht weit hinausragt. Damit das dritte Element 84 weniger lateralen Platz einnimmt, ist es möglich, den ersten Schenkel 84a zu verkürzen und zwar bevorzugterweise derart, dass der zweite Schenkel 84b in Neutralhaltung parallel zur Sagittalachse verläuft. Das erleichtert das Schwingen der Arme beim Gehen und spart Gewicht. Dazu ist es vorgesehen, den Winkel zwischen den Schenkeln 84a und 84b entsprechend anzupassen.

In den beschriebenen Beispielen sind aus Gründen der Übersichtlichkeit nicht explizit die notwendigen Lager, Achsbefestigungen und Aktuatoren angegeben. Aktuatoren können in oder an jedem Element angebracht sein. Entsprechend werden dann feste Achsverbindungen oder z.B. kugelgelagerte Verbindungen notwendig. So wie das erste Ausführungsbeispiel dargestellt ist, wird jedoch bevorzugt, dass ein Aktuator in einem Exo-Unterschenkel 88 die fünfte Achse 97 zum Exo-Fuß 90 aktuiert. Ein erster Aktuator im Exo-Oberschenkelelement 86 aktuiert die vierte Achse 96 des Kniegelenks, ein zweiter Aktuator im Exo-Oberschenkel 86 aktuiert die dritte Achse 95 des Exo-Hüftgelenks, ein Aktuator im Element 84 aktuiert die zweite Achse 94 des Hüftgelenks, und ein Aktuator an, in, oder auf der Exo-Hüfte bzw. Exo-Rückenplatte 80a aktuiert die erste Achse 93.

Der Mechanismus des Exoskeletts lässt sich durch verschiedenste Aktuatoren antreiben. Dies umfasst normale Getriebemotoren, Linearaktuatoren, hydraulische oder pneumatische Zylinder, Direktantrieb durch getriebelose Torquemotoren, Antrieb durch Kabel und Bowdenzüge und Rollen und anderes. Besonders vorteilhaft ist der Antrieb über Motoren mit rückfahrbarem kugelgelagertem Schneckengetriebe (ball worm, ball worm gear, recirculating ball worm drive laut US 3468179 A), mit globalen Rollspindeln oder "harmonic drive"-Getrieben.

Besonders der Exo-Fuß 90 kann im Allgemeinen noch über eine weitere Achse und nötige Bauteile verfügen mit welcher Pronation und Supination aktuiert werden. Eine besonders vorteilhafte Weiterbildung des Exo-Fußes ist weiter unten beschrieben und wird dort als Exo-Fuß 9000 bezeichnet.

Es kann vorteilhaft sein, wenn die beiden Achsen des Exo-Oberschenkels 86 nicht parallel zueinander verlaufen. Die vierte Achse 96 muss jedoch immer parallel oder fast parallel zur Achse des Kniegelenkes verlaufen. Die dritte Achse 95 kann jedoch im Allgemeinen beliebig orientiert sein. Dadurch kann, entsprechend zum Effekt des Winkel $\alpha$, beeinflusst werden, wie weit jeweils die externe und interne Rotation des Beins ermöglich wird.

Der beschriebene Hüftmechanismus, mit wenigstens 3 Achsen, welche sich im Zentrum des Hüftgelenks schneiden, ist praktisch recht tolerant bzgl. Abweichungen in der Achsrichtung. Auch kann der Nutzer größer, kleiner, zu weit vorne, oder zu weit hinten, zu weit links, oder zu weit rechts von der idealen Position sein. Dies kann genutzt werden, um ein Exoskelett einer Größe für mehr als einen Nutzer zu verwenden. Auch wird die Einstellung der Achsabstände und Winkel an einen speziellen Nutzer erleichtert. Das Prinzip des Mechanismus geht durch diese Abweichungen jedoch nicht verloren. Es ist vorgesehen, Befestigungspunkte und Lager von Achsen verschiebbar und einstellbar zu konstruieren. Es ist vorteilhaft, den Abstand vom Rücken des Nutzers zur Hüftplatte, und auch seine vertikale Position einstellen zu können, um so das Zentrum seines Hüftgelenks mit dem Schnittpunkt der Achsen auszurichten.

Aufgrund der weitgehend anthropomorphen Beschaffenheit des Exoskeletts ist es möglich, die beschriebenen Elemente zum großen Teil so zu gestalten, dass sie den Nutzer umfassen, und nicht nur, wie in den Abbildungen, seitlich zu ihm stehen.

Es ist anzumerken dass, überraschender Weise, bei dem bevorzugten einfachen Hüftmechanismus (z.B. Fig.1-25), auch im Zusammenhang mit dem beschriebenen Exoskelett, im allgemeinen nur äußerst geringe Drehmomente nötig sind, um die zweite Achse 94 zu aktuieren. Das trifft auch dann zu, wenn das Exoskelett, wie in teleoperativen Anwendungen, das gesamte Gewicht des Nutzers tragen muss, während es selbst, an Hüfte oder Rücken, von einem Bewegungssimulator getragen wird. Sollte z.B. das Gewicht des Nutzers nur auf einem gestreckten Bein ruhen, und dort, ganz mittels seines Fußes auf das Fußelement des Exoskeletts auf ein Exo-Bein übertragen werden, befindet sich in Ruhe der Schwerpunkt des Beins und des Nutzers immer lotrecht unter oder über seinem belasteten Hüftgelenk (Punkt 91). Ist $\beta=0°$, und kann das Gewicht der Elemente 82 und 94 gegenüber den anderen Gewichten vernachlässigt werden, können alleinige Änderungen der Gelenkwinkel der Achsen 93 und 94 die potentielle Energie ändern indem sie den Schwerpunkt anheben. Dazu sind erhebliche Drehmomente nötig. Die Aktuation der Achse 94 ist jedoch auch möglich ohne die potentielle Energie zu ändern, wenn die Achsen 93 und 95 so mitbewegt werden, dass eine alleinige Außendrehung oder Innendrehung (externe oder interne Rotation des Hüftgelenkes) des Fußes erzielt wird. Der Schwerpunkt bleibt dabei auf der gleichen Höhe und somit wird keine Arbeit verrichtet und es treten keine axialen Drehmomente auf. Da sich, durch den geänderten Gelenkwinkel der Achse 93, jedoch die Position der Elemente 82 und 84 in einem Schwerefeld im Allgemeinen ändert, muss dazu ein geringes axiales Drehmoment durch den Aktuator aufgebracht oder aufgenommen werden. Die transversalen Drehmomente auf diese Achse sind jedoch im Allgemeinen sehr groß, sobald ein Bein mit erheblichen Teilen des Körpergewichts belastet wird. Die Gelenke müssen entsprechend stark ausgelegt sein. Auch müssen Reibungskräfte in den Lagern überwunden werden, welche gering sind. Die externe oder interne Rotation des Beines ist beim Menschen kräftemäßig nur schwach ausgeprägt. Daher sind auch die zu aktuierenden Drehmomente der Achse 94, welche hauptsächlich diesen Freiheitsgrad bedient, im Vergleich zu anderen auftretenden Drehmomenten in den Exo-Beinen gering. Entsprechend können Aktuatoren dort kleiner und schwächer ausfallen.

Analog sind auch die axialen Drehmomente eines Aufbaus mit mehreren Elementen 82, 82b, etc (Fig. 24-26) nur gering. Die recht kleinen Aktuatoren können daher für alle Aufbauten, leicht an oder in diesen Elementen lokalisiert sein, aber auch entfernt (Bowdenzüge). Dies trifft auch zu, wenn nur ein Element 82 verwendet wird. Auch wenn $\beta$ ungleich 0° sein sollte, sind diese axialen Drehmoment gering, sofern $\beta$ klein bleibt.

Alle beschriebenen Aufbauten und Kombinationen von Eigenschaften können außer für Exoskelette auch für humanoide Roboter und auch virtuelle Avatare oder virtuelle Maschinen angewendet werden. In den virtuellen Fällen müssen reale Bauteile durch entsprechende virtuelle ersetzt werden.

Wie bereits erwähnt, wurde bei der bisherigen Beschreibung der bevorzugten Exoskelette 1001, 1002, 1003 auf die Darstellung und Beschreibung zugehöriger Aktuatoren verzichtet.

Exoskelette für die Teleoperation, also zur Kontrolle von Statthaltern in einer virtuellen (Avatare) oder realen Umgebung (humanoide Roboter), benutzen Bewegungssimulatoren um statische oder zeitlich veränderliche Körperbeschleunigungen auf den Nutzer auszuüben. Dazu werden auch kardanische Aufhängungen eingesetzt.

Anhand der folgenden Abbildungen werden bevorzugte Bewegungssimulatoren beschrieben, die zusammen mit einem Exoskelett verwendet werden können.

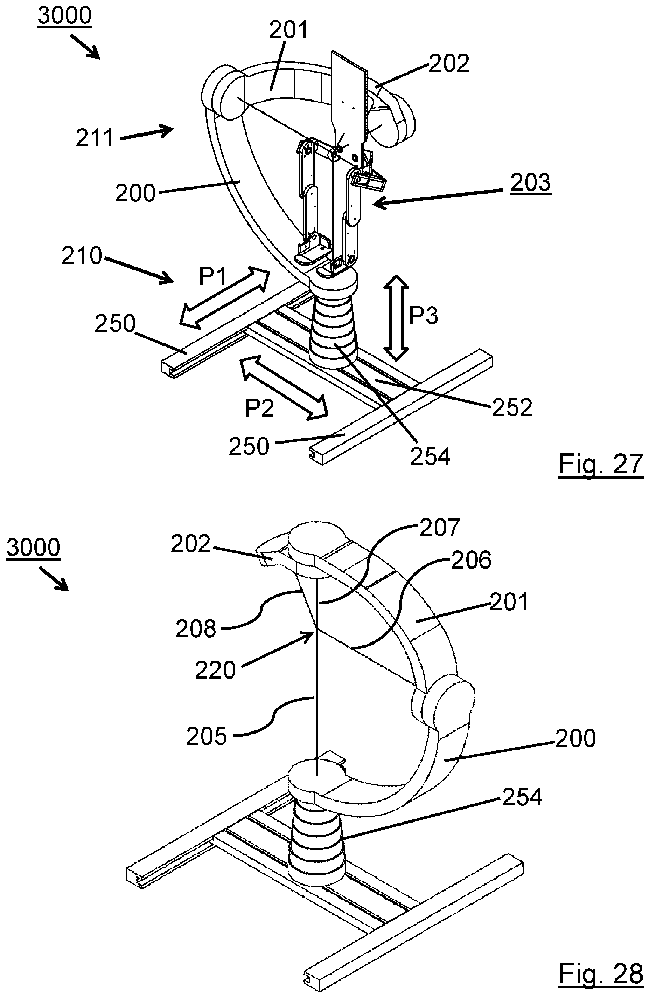

Fig. 27 zeigt in perspektivischer Darstellung einen Bewegungssimulator 3000, an dem ein Exoskelett 203 mit Rückenhalterung befestigt ist. Der Bewegungssimulator 3000 besteht im Wesentlichen aus zwei Hauptteilen, nämlich

- einer Translationseinheit 210 mit den Aktuatoren 250, 252, 254 sowie geeigneten Antriebsmitteln, wie Motoren, Wellen, Seilen, usw., die hier nicht dargestellt sind. Dadurch werden translatorische Bewegungen entlang der Pfeile P1, P2 und P3 ermöglicht.
- einer Rotationseinheit 211 mit einem ersten Rotationselement 200, einem zweiten Rotationselement 201 sowie einem dritten Rotationselement 202. Diese sind jeweils drehbar gegenüber benachbarten Elementen gelagert.

Im Folgenden wird hauptsächlich die Rotationseinheit 211 beschrieben. Fig. 28 ist ebenfalls eine perspektivische Darstellung des Bewegungssimulators 3000 und dient im Folgenden zur Beschreibung verschiedener Rotationsachsen.

Das erste Rotationselement 200 ist mit seinem ersten Ende an dem Linearaktuator 254 drehbar um eine erste Rotationsachse 205 gelagert, die bei Normalbetrieb im Wesentlichen senkrecht verläuft und der Hochachse des Linearaktuators 254 entspricht. Am zweiten Ende des ersten Rotationselements 200 ist das zweite Rotationselement 201 drehbar um eine zweite Rotationsachse 206 gelagert. An dem anderen Ende dieses zweiten Rotationselements 201 ist das dritte Rotationselement 202 um eine dritte Rotationsachse 207 gelagert. An dem anderen Ende des dritten Rotationselements 202 ist das Exoskelett 203 drehbar um eine vierte Rotationsachse 208 gelagert. Es sei darauf hingewiesen, dass für die Realisierung der genannten Drehachsen jeweils ein entsprechendes Lager vorzusehen und auch anzuordnen ist. Dies ist dem Fachmann allgemein bekannt, so dass darauf nicht weiter eingegangen wird.

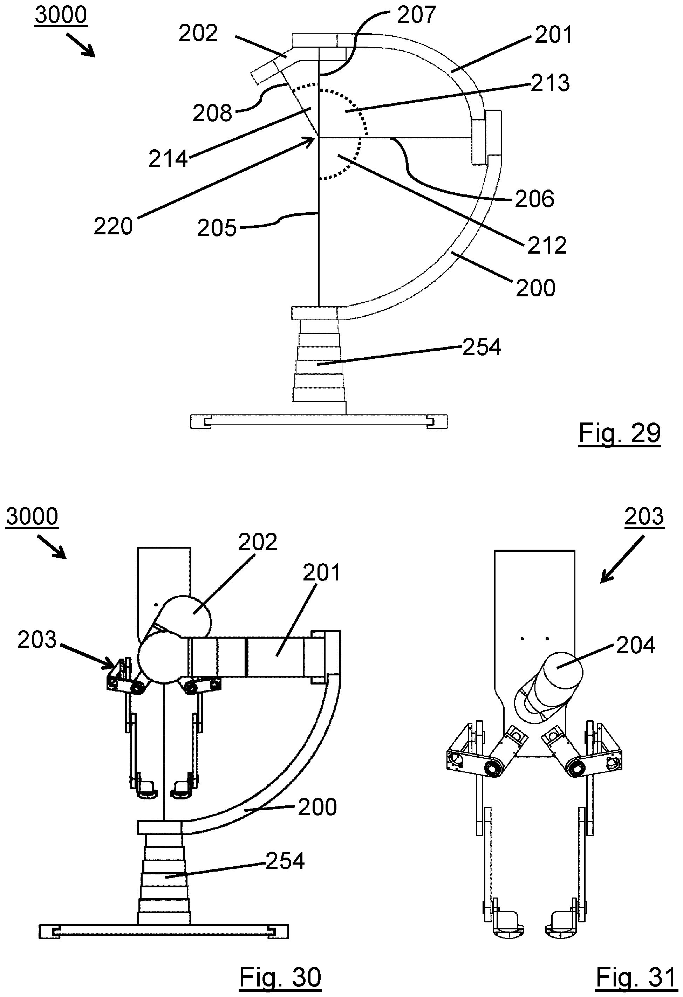

Aus Fig. 29 ist erkennbar, dass sich die Rotationsachsen 205, 206, 207, 208 in einem Punkt 220 schneiden und welche Winkel zwischen den einzelnen Elementen bzw. Achsen gebildet werden, nämlich:

- die Rotationsachsen 205 und 206 bilden einen Elementwinkel 212
- die Rotationsachsen 206 und 207 bilden einen Elementwinkel 213
- die Rotationsachsen 207 und 208 bilden einen Elementwinkel 214.

Die Summe der Elementwinkel muss größer als 180° sein, um eine kardanische Blockade (engl.: gimbal lock) zu vermeiden und um zu erlauben, dass der Nutzer im Exoskelett, alle möglichen räumlichen Orientierungen einnehmen kann.

Das dritte Rotationselement 202 ist als einfacher, kurzer und kleiner Bogen oder Klammer ausgelegt, verfügt also nur über zwei Befestigungspunkte für Achsen und Achslager. Um ein möglichst weiches Verhalten der Bewegung in Bereichen zu erzielen, in welche die Rotationseinheit 211 mit nur 3 Achsen einen gimbal lock erfahren würde, wird der Winkel von dem dritten Rotationselement 202 möglichst groß gewählt.

Im Allgemeinen kann sich das Exoskelett 203 dann nicht mehr um 360° um die Achse 208 drehen ohne mit dem dritten Rotationselement 202 zu kollidieren oder dann zu kollidieren, wenn der Nutzer bestimmte Körperhaltungen einnimmt. Diese Kollisionen müssen und können jedoch verhindert werden. Es ist im Allgemeinen nämlich nicht nötig, dass die Achse 208 um 360° aktuiert werden muss. (Bei kleineren Elementwinkeln 213 ist Aktuation um 360° jedoch möglich. Dann treten jedoch wieder zunehmend die genannten Probleme mit hohen Geschwindigkeiten und Beschleunigungen auf.)

Wie in Fig. 30 zu sehen, ist das dritte Rotationselement 202 bevorzugt so am Exoskelett 203 angebracht, dass es insgesamt recht weit oben sitzt, und der Teil, welcher an dem zweiten Rotationselement 201 befestigt wird, relativ zum Befestigungspunkt am Exoskelett (in Neutralhaltung der Rotationseinheit, wie in den Figuren gezeigt) unten sitzt. Andere Befestigungsarten sind jedoch möglich. In den Figuren ist auch zu sehen, dass das dritte Rotationselement 202 vorzugsweise in einem Winkel zum Exoskelett 203 angebracht ist. Dies wird durch eine Rückenhalterung 204 erreicht, welche ganz analog zur Achse 93 des zweiten Elements 82 der Hüfte (Fig. 2), durch zwei Winkel beschrieben werden kann. Wichtig ist, dass die Elementachse 208 durch den gemeinsamen Schnittpunkt aller Elementachsen 205, 206, 207, 208 verläuft. Dieser liegt vorzugsweise im Körper des Nutzers, z.B. in seinem Kopf, oder in seinem Torso. Vorzugsweise wird ein Startwinkel für das dritte Rotationselement 202 in der Grundhaltung gewählt und dann eine geeignete Rückenhalterung 204 entworfen. Diese Halterung 204 bildet dann mit der Rückenplatte (oder Hüftplatte, etc.) des Exoskeletts 203 eine starre Einheit. Element 202 ist im Beispielaufbau um 30° aus der Vertikalen geneigt. Dieser Winkel kann auch anders sein, sofern Element 202 nicht mit der Rückenplatte oder anderen Teilen des Exoskeletts 203 kollidiert. Der aktuierte Winkel der Achse 208 muss dann auf einen Bereich eingeschränkt werden, der so klein oder kleiner ist, dass das dritte Rotationselement 202 nie mit der Rückenplatte kollidieren kann. Es reicht gewöhnlich aus, diesen Bereich deutlich kleiner als das Maximum zu wählen sofern die effektiv verbleibende Summe der Gelenkwinkel 180° übersteigt. Alle anderen Achsen 205, 206 und 207 können über volle 360° aktuiert werden.

Die bisher beschriebenen Exoskelette können weiterhin verbessert werden durch eine besondere Ausgestaltung der Füße 90. Exoskelette - und auch humanoide Roboter - benötigen üblicherweise zwei Freiheitsgrade des Fußes um der Beweglichkeit des Menschen nahe zu kommen. Das erfordert entsprechenden Aufwand bei der Aktuierung, wodurch wiederum entsprechender Platz und Gewicht benötigt werden.

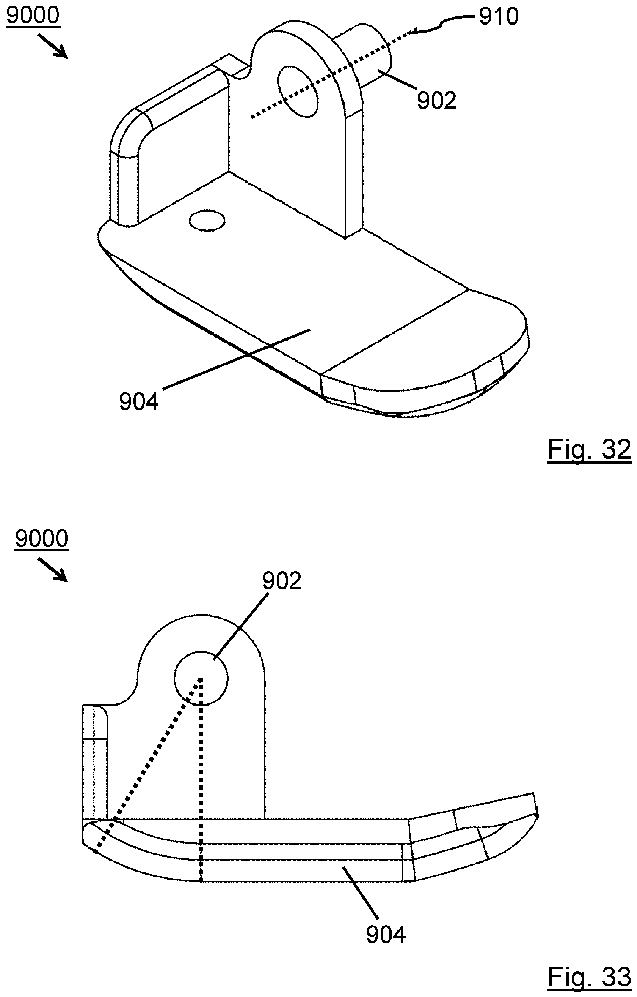

Fig. 32 zeigt ein bevorzugtes Ausführungsbeispiel für einen erfindungsgemäßen Exo-Fuß 9000. Dieser Fuß 9000 verfügt über eine Achse 910, welche in etwa parallel zur Querachse des Fußgelenks des Nutzers liegt. Parallel zu dieser Achse verläuft bevorzugt ein Schaft 902, um den Fuß an einem Aktuator zu befestigen. Alternativ ist dieser Schaft 902 Teil des Aktuators. Supination und Pronation des Fußes können also nicht aktuiert werden. Um Bewegung ähnlicher Art doch zu ermöglichen, wenn auch nicht aktuiert, wird die Sohle 904 des Fußes 9000 seitlich abgerundet, wie in Fig. 33 gezeigt.

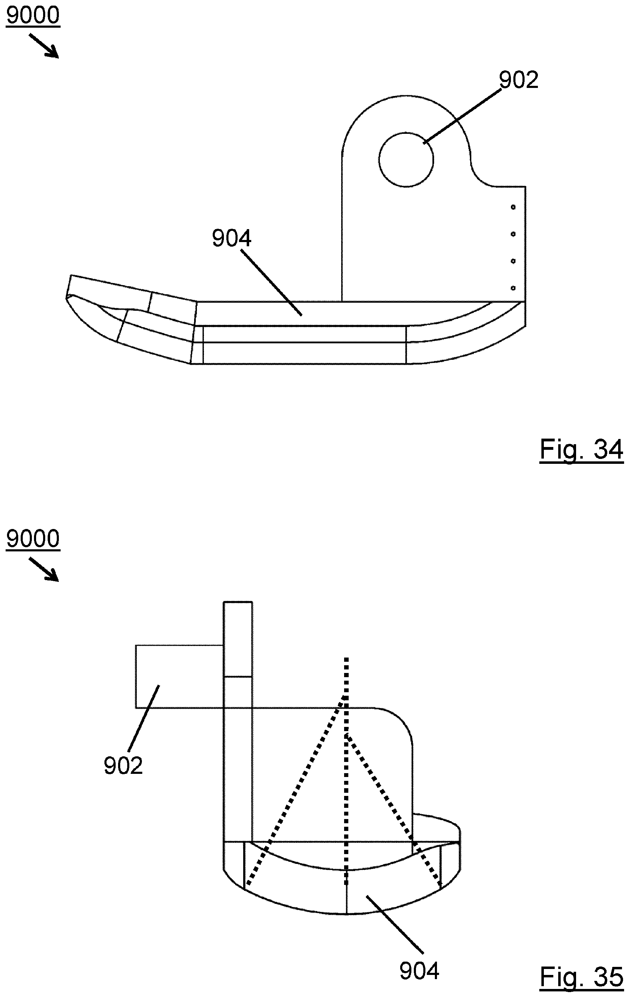

Dies geschieht bevorzugt ausgehend von einem Profil von zwei Kreissegmenten mit unterschiedlichen Radien von Kreisen oder kreis-ähnlichen Formen, welche Ihre Mittelpunkte in der Nähe des Sprunggelenks des Nutzers haben und parallel zur Frontalebene des Nutzers liegen (Fig. 35). Kleinere Kreisdurchmesser erleichtern ein Abrollen, größere erlauben einen sichereren Stand. Es ist vorzuziehen, die Pronation zu erleichtern, also auf der Innenseite des Fußes 9000 kleinere Radien zu wählen. Das Profil wird entlang der Fußlänge nach vorne, parallel zur Sagitalachse, gestrichen um die Oberfläche der Sohle im mittleren Bereich des Fußes 9000 zu definieren (Fig. 34, 35). Um den Fersenbereich des Exo-Fußes 9000 zu definieren wird das Profil nach hinten um die Achse des Fußgelenks gedreht.

Im mittleren Teil des Fußes 9000, etwa vom Sprunggelenk vorwärts bis zum ersten Zehengelenk, bildet die Oberfläche der Sohle 904 dann links und rechts jeweils das Oberflächensegment eines Zylinders oder einer zylinderähnlichen Geometrie. Im hinteren Teil des Fußes 9000, etwa vom Sprunggelenk nach hinten, ähnelt die Sohlenoberfläche links und rechts jeweils einem Oberflächensegment einer Kugel oder eines Torus oder dergleichen.

Der vordere Teil des Exo-Fußes 9000 hat am Übergang vom mittleren Teil des Fußes den gleichen Querschnitt wie der mittlere Teil. Der vordere Teil kann flach sein ist aber bevorzugt nach oben angewinkelt um ein Abrollen zu erlauben. Der Übergang vom mittleren zum vorderen Teil kann auch genau so wie der Übergang vom mittleren zum hinteren Teil erfolgen, indem das Oberflächenprofil um eine Querachse rotiert/gestrichen wird. Der Abstand der Querachse zur Sohle 904 ist für den vorderen Teil bevorzugt deutlich größer als der Abstand von der Sohle 904 zum Sprunggelenk. Bevorzugt liegt diese Achse in der Nähe des Unterschenkels um ein leichtes Abrollen zu erzielen.

Der Vorteil des gegebenen Fußes 9000 ist, dass nun der Fuß 9000 des Exoskeletts (auch Roboters oder virtuellen Avatars oder virtueller Maschine) wie ein rollendes Lager wirkt. Wenn ein Schritt getätigt wird, und der Fuß 9000 mit dem abgerundeten Fersenbereich den Boden berührt, rollt der Fuß 9000 auf der Fersenoberfläche ab, bis der mittlere Fußbereich den Boden berührt. Bis zu diesem Zeitpunkt wird der Abstand von Fußgelenk zu Boden praktisch konstant gehalten, sofern der Fuß 9000 nicht gleichzeitig stark von links nach rechts rollen sollte. Auch dann wäre die Änderung des Abstandes langsam und graduell. Dieser praktisch konstante Abstand beim Abrollen heißt auch, dass durch das Abrollen des Fußes 9000 eine feste Basis geschaffen wird, das Sprunggelenk, welche Ihre Höhe nicht ändert, und daher keine Arbeit auf den oberen Teil des Körpers leistet, wenn der Nutzer mit konstanter Geschwindigkeit geht (Ansonsten wirken Brems- oder Beschleunigungskräfte in oder entgegen der Bewegungsrichtung). Das Abrollen wird deshalb als sehr flüssig und weich empfunden, und zwar selbst dann, wenn die Sohle 904 des Fußes 9000 tatsächlich aus hartem Material gefertigt wird.

Wenn der vordere Fußteil ebenso geformt wird wie der hintere, jedoch mit einem größeren Radius bei Abrollen nach vorne als bei der Ferse, tritt der selbe Effekt auf und der Fuß leistet keine Arbeit auf große Teile des Körpers. Die natürliche Bewegung des Knies und des Fußgelenks verlangt jedoch hier nach einem größeren Radius. Es kann auch eine Position des Fußgelenks fest gewählt werden, bei der der Mittelpunkt dieses Radius im Kniegelenk liegt. Dies erlaubt extrem weiches Abrollen selbst ohne bewegliches Fußgelenk.

Durch den tangentialen Übergang der Radien des Profils wird ein Rollen nach links und rechts zu jedem Zeitpunkt erlaubt.

Der mittlere Teil des Fußes 9000 ist von der Seite gesehen gerade. Dies erlaubt ein stabiles Stehen und der Nutzer hat einen weiten Bereich, über den er seinen Schwerpunkt verlagern kann ohne instabil zu werden. Dieser flache Bereich kann durch Verschiebung der Rotationsachsen des Profils nach vorne und hinten verkleinert oder vergrößert werden um die Wendigkeit zu beeinflussen. Ebenso kann der Übergang zum vorderen Bereich des Fußes 9000 nach vorne und hinten verschoben werden.

Seitlich gibt es bei dem gezeigten Exo-Fuß 9000 keinen solchen geraden Bereich. Er kann jedoch hinzugefügt werden. Dann liegen die Mittelpunkte der Kreissegmente in Fig. 35 nicht übereinander, sondern wären nach links und rechts versetzt. Unten hätte die Sohle dann einen geraden Abschnitt, welcher bevorzugt tangential in die Kreissegmente übergeht.

Ganz an den Außenkanten des Fußes 9000 werden bevorzugterweise Abrundungen mit kleinen Radien verwendet, um extreme Körperhaltungen zu ermöglichen und Verletzungen vorzubeugen. Die Sohle 904 wird bevorzugterweise mit Gummi etc. bespannt und/oder daraus hergestellt. Dies verbessert zum einen die Bodenhaftung und Stoßdämpfung beim Gehen. Besonders das seitliche Abrollen wird durch ein elastisches, dämpfendes Material auch gehemmt, was bei einem Querprofil ohne geraden Abschnitt hilfreich sein kann, um den Aufwand zum Halten des Gleichgewichts beim Stehen auf einen Fuß zu reduzieren.

Es ist möglich diese Art des Fußes in Exoskeletten, humanoiden Robotern, virtuellen Avataren oder virtuellen Maschinen zu nutzen.

Als Bewegungsplattformen für Exoskelette in teleoperativen Anwendungen (virtuell oder realer Statthalter) sind auch Stewart-Plattformen geeignet, die auch als Hexapod bezeichnet werden. Stewart-Plattformen verfügen im Allgemeinen über sechs Linearaktuatoren oder ähnliche Mittel, welche auf einer Seite am Boden oder einer anderen Basis befestigt sind, und auf der anderen Seite an einer Arbeitsplattform oder Arbeitsebene.

Die hier beschriebenen Neuerungen können in vielfältiger Weise miteinander kombiniert werden, um vorteilhafte neue Eigenschaften von Systemen der Teleoperation, Robotik, Bewegungssimulation und Aktuation zu erlangen.

Es kann jede einzelne der beschriebenen Vorrichtungen oder Verfahren, jede Kombination von Vorrichtungen oder Verfahren oder eine Kombination aller Vorrichtungen oder Verfahren realisiert werden.

Im Folgenden werden einige vorteilhafte Kombinationen genannt.

Die beschriebenen Fußelemente (Fig. 32-35 und Beschreibung) für humanoide Roboter, virtuelle oder reale Maschinen und Exoskelette entfalten insbesondere mit Exoskeletten, Robotern, oder virtuellen Maschinen ihre vollen Vorteile, welche über ein Hüftgelenk gemäß Fig. 1-26 und obiger Beschreibung verfügen. Dieses Hüftgelenk erlaubt nämlich bessere Kontrolle der Beine und damit Füße, auch in Grenzsituationen, und kann dadurch maximalen Vorteil aus den zusätzlichen Freiheitsgraden der Fußelemente ziehen.

Die beschriebenen Exoskelette (auch in Kombination mit den beschrieben Füßen) lassen sich mit den beschriebenen Bewegungsplattformen und deren Variationen kombinieren. Dadurch wird es möglich Teleoperationen besser durchzuführen.

Die beschriebenen kardanischen Aufhängungen als Bewegungssimulator, ihre Elemente oder Teile davon lassen sich mit den beschriebenen Exoskeletten, mit verbessertem Hüftgelenk, und der Stewart-Plattform kombinieren. Dies erlaubt es die verbesserte Beweglichkeit und Stärke des Exoskeletts auszunutzen, welche sonst durch begrenzte Bewegungssimulatoren eingeschränkt wäre. So werden z.B. schnelles Springen, Laufen, Rennen, Trampolinsprüngen, etc. zwar durch die beschriebenen Exoskelette ermöglicht, jedoch ist auch ein geeigneter Bewegungssimulator nötig, um dieses Potential voll zu nutzen, welchen die beschriebenen Bewegungssimulatoren darstellen.

Entsprechendes gilt für Methoden und Vorrichtungen für die Reduktion oder Erhöhung der empfundenen Schwerkraft. Diese profitieren von den beschriebenen Hüftgelenken, Fußelementen, und Bewegungssimulatoren, alleine oder in jeder Kombination. Die Methoden und Vorrichtungen für die Reduktion oder Erhöhung der empfundenen Schwerkraft erlaubt z.B. die Verwendung von leichteren Exoskeletten, wenn Kräfte reduziert werden. Um die dann möglichen schnelleren Bewegungen und Lageänderungen auch durchführen zu können, werden jedoch schnellere und bessere Bewegungssimulatoren, wie beschrieben, benötigt oder sind zumindest hilfreich. Werden Kräfte erhöht wird es besonders wichtig, dass jeder Freiheitsgrad des Fußes aktuiert ist.

Voll aktuierte Hüftgelenke mit 3 effektiven Freiheitsgraden und voll aktuierte Füße, wie beschrieben, erlauben es schwerere Lasten durch frei bewegliche Exoskelette, welche ein Nutzer direkt steuert, tragen zu lassen. Sollten stattdessen entsprechende Roboter teleoperativ bedient werden, von einem entfernten Nutzer in einem Exoskelett an einem Bewegungssimulator, profitiert dieser Nutzer von Möglichkeiten der oben beschriebenen Schwerereduktion, und unter Nutzung des beschriebenen Fußes. Dies trifft auch auf virtuelle Anwendungen zu. Die Verwendung von den beschriebenen Hüften in Exoskelett und Roboter verbessern die Anwendbarkeit weiter.

Es kann vorgesehen sein, dass ein Exoskelett von der Bewegungsplattform am Rücken schnell gelöst werden kann. Dann kann dieses Exoskelett sofort als mobiles Exoskelett zur Kraftverstärkung oder als humanoider Roboter eingesetzt werden. Es ist dann vorteilhaft dieses Exoskelett auch mit dem beschriebenen Fuß auszustatten, um leichtes Abrollen und bessere Kontrolle etc. zu erlauben. Dann kann dieses Exoskelett oder Roboter etc. auch über Vorrichtungen zur Schwerkraftreduktion oder Verstärkung verfügen.

In der Verwendung als "gehender Rollstuhl" profitieren Exoskelette von jeder Kombination von Hüftgelenk, dem beschriebenen Fuß, und den Vorrichtungen und Verfahren der Schwerkraftkompensation oder Schwerkrafterhöhung. Sie erlauben gehbehinderten, schwachen, oder gelähmten sich natürlicher zu bewegen, ohne ihr volles Gewicht mit den Beinen tragen zu müssen. Ebenso kann das empfundene Gewicht graduell gesteigert werden, um Muskelaufbau oder Gewöhnung zu erreichen. Für Astronauten kann auch ein Eindruck von Schwerkraft erreicht werden, welcher sonst nicht vorläge, hier jedoch dazu dienen kann, Muskelabbau zu mindern.

**Bezugszeichenliste**

| | |
|---|---|
| 80a | Element 1, erstes Element, Exo-Hüfte oder Exo-Rückenplatte |
| 80b | Achsbefestigungsregion (Befestigungselement) von 80a |

| | |
|---|---|
| 81 | Schaft der Achse 1 |
| 82 | Exo-Hüftgelenk 1, Element 2, zweites Element |
| 82b | Exo-Hüftgelenk 1b, Element 2b |
| 82c | Exo-Hüftgelenk 1c, Element 2c |
| 83 | Schaft der Achse 2 |
| 84 | Exo-Hüftgelenk 2, Element 3, drittes Element |
| 84a, b | Schenkel von 84 |
| 85 | Schaft der Achse 3 |
| 86 | Element 4, viertes Element, Exo-Oberschenkel |
| 87 | Schaft der Achse 4 |
| 88 | Element 5, fünftes Element, Exo-Unterschenke |
| 89 | Schaft der Achse 5 |
| 90 | Element 5, sechstes Element, Exo-Fuß |
| 91 | Mittelpunkt des Hüftgelenks |
| 92 | Achse parallel zur Sagitalachse durch Mittelpunkt des Hüftgelenks |
| 93 | Achse 1, erste Achse |
| 94 | Achse 2, zweite Achse |
| 94b | Achse 2b |
| 94b | Achse 2c |
| 95 | Achse 3, dritte Achse |
| 96 | Achse 4. vierte Achse |
| 97 | Achse 5, fünfte Achse |
| | |
| 200 | Element A, erstes Rotationselement |
| 201 | Element B, zweites Rotationselement |
| 202 | Element C, drittes Rotationselement |
| 203 | Exoskelett mit Rückenhalterung |
| 204 | Rückenhalterung |
| 205 | Achse A, erste Rotationsachse |
| 206 | Achse B, zweite Rotationsachse |
| 207 | Achse C, dritte Rotationsachse |
| 208 | Achse D, vierte Rotationsachse |
| 210 | Translationseinheit |
| 211 | Rotationseinheit |
| 212 | Elementwinkel A |
| 213 | Elementwinkel B |
| 214 | Elementwinkel C |
| 220 | Schnittpunkt von 205-208 |
| 250 | erster Linearaktuator |
| 252 | zweiter Linearaktuator |
| 254 | dritter Linearaktuator |
| | |
| 902 | Schaft |
| 904 | Sohle |
| 910 | Achse durch 902 |
| | |
| 1000-1003 | Exoskelett |
| 2000-2009 | Aktuatoren |
| 3000 | Bewegungssimulator |
| 9000 | Exo-Fuß |
| X | Angetriebene Komponente |

**Patentansprüche**

1. Eine Vorrichtung (1000) in Form eines Exoskeletts oder eines Statthalters, wobei die Vorrichtung (1000) ein erstes Element (80a, 80b), ein zweites Element (82), ein drittes Element (84) und ein viertes Element (86) enthält, wobei

   - das erste Element (80a, 80b) mit einem ersten Drehgelenk (81) verbunden ist, über das das zweite Element (82) um eine erste Achse (93) drehbar gelagert ist,

- das zweite Element (82) mit einem zweiten Drehgelenk (83) verbunden ist, über das das dritte Element (84) um eine zweite Achse (94) drehbar gelagert ist,

- das dritte Element (84) mit einem dritten Drehgelenk (85) verbunden ist, über das das vierte Element (86) um eine dritte Achse (95) zum Zwecke der Flexion/Extension eines Oberschenkels drehbar gelagert ist,

- die Achsen (93, 94, 95) durch einen gemeinsamen Punkt (91) verlaufen, und

- die erste Achse (93) mit der zweiten Achse (94) einen ersten Winkel ($\varphi_1$) bildet und die zweite Achse (94) mit der dritten Achse (95) einen zweiten Winkel ($\varphi_2$) bildet,

- die erste Achse (93) um eine durch den gemeinsamen Punkt (91) verlaufende Vertikalachse um einen dritten Winkel ($\alpha$) gedreht sein kann,

- die erste Achse (93) um eine durch den gemeinsamen Punkt (91) verlaufende Horizontalachse um einen vierten Winkel ($\beta$) gedreht sein kann.

2. Die Vorrichtung nach einem der vorigen Ansprüche, **dadurch gekennzeichnet, dass** der erste Winkel ($\varphi_1$) einen Wert im Bereich von 25 - 45 Grad und bevorzugt 35 Grad hat.

3. Die Vorrichtung nach einem der vorigen Ansprüche, **dadurch gekennzeichnet, dass** der zweite Winkel ($\varphi_2$) einen Wert im Bereich von 60 - 80 Grad und bevorzugt 70 Grad hat.

4. Die Vorrichtung nach einem der vorigen Ansprüche, **dadurch gekennzeichnet, dass** der dritte Winkel ($\alpha$) und/oder der vierte Winkel ($\beta$) einen Wert im Bereich von 10 - 30 Grad und bevorzugt 20 Grad hat.

5. Die Vorrichtung nach einem der vorigen Ansprüche, **dadurch gekennzeichnet, dass** die Summe des ersten Winkels ($\varphi_1$) und des zweiten Winkels ($\varphi_2$) im Bereich von 85 - 120 Grad liegt und der erste Winkel ($\varphi_1$) in dem Bereich von 15 - 45 Grad liegt.

6. Die Vorrichtung nach einem der vorigen Ansprüche, **dadurch gekennzeichnet, dass** mindestens eines der Elemente (82, 84, 86) unterteilt ist in mindestens zwei Teilelemente (82a, b, c) und benachbarte dieser Teilelemente (82a, b, c) untereinander drehbar verbunden sind und zwar jeweils um eine Achse (94a, 94b, 94c), wobei diese Achsen durch den gemeinsamen Punkt (91) verlaufen.

7. Die Vorrichtung nach einem der vorigen Ansprüche, **dadurch gekennzeichnet, dass** ein fünftes Element (90; 9000) drehbar um eine weitere Achse (910) gelagert ist und eine Fläche (904) aufweist, die parallel zu der weiteren Achse (910) verläuft, wobei diese Fläche (904) zumindest auf ihrer von der Achse (910) abgewandten Seite ein Profil aufweist, das mindestens zwei Kreissegmenten mit unterschiedlichen Radien entspricht.

8. Die Vorrichtung nach dem vorigen Anspruch, **dadurch gekennzeichnet, dass** die zu den genannten Kreissegmenten gehörigen Kreise ihre Mittelpunkte in der Nähe des Nutzers haben und/oder parallel zur Frontalebene des Nutzers liegen.

9. Die Vorrichtung nach einem der vorigen Ansprüche, **dadurch gekennzeichnet, dass** Befestigungsmittel vorgesehen sind, die derart gestaltet und angeordnet sind, dass ein Nutzer bevorzugterweise mit seiner Hüfte, seinem Torso und/oder seinen Oberschenkeln fest mit wenigstens einem der Elemente (80a, 80b; 82; 84; 86; 90) und/oder mit Teilen einer Rückenplatte verbunden werden kann.

10. Die Vorrichtung nach dem vorigen Anspruch, **dadurch gekennzeichnet, dass** die Befestigungsmittel Bänder, Schalen und/oder Geschirr enthalten.

11. Die Vorrichtung nach einem der beiden vorigen Ansprüche, **dadurch gekennzeichnet, dass** die Position der Befestigungsmittel durch Stellmittel geändert werden kann.

12. Die Vorrichtung nach einem der drei vorigen Ansprüche, **dadurch gekennzeichnet, dass** die Kraft, welche die Befestigungsmittel tragen, durch Stellmittel geändert werden kann.

13. Die Vorrichtung nach dem vorigen Anspruch, **dadurch gekennzeichnet, dass** die durch die Befestigungsmittel getragene Kraft gemessen und mittels der Stellmittel und eines Regelkreises beeinflusst werden kann.

14. Die Vorrichtung nach einem der vorigen Ansprüche, **dadurch gekennzeichnet, dass** Mittel vorgesehen sind, die geeignet sind, eine Fußfläche (904) relativ zu dem Nutzer zu bewegen.

15. Die Vorrichtung nach einem der vorigen Ansprüche, **dadurch gekennzeichnet, dass** Befestigungsmittel derart gestaltet sind und ansteuerbar sind, dass sie entspannt oder bewegt werden können und somit der Grad der Entlastung geändert werden kann.

## Claims

1. A device (1000) in the form of an exoskeleton or a proxy, whereby the device (1000) comprises a first member (80a, 80b), a second member (82), a third member (84), and a fourth member (86), wherein

   - the first member (80a, 80b) is connected to a first rotary joint (81) via which the second member (82) is rotatably supported about a first axis (93),
   - the second member (82) is connected to a second rotary joint (83) via which the third member (84) is rotatably supported about a second axis (94),
   - the third member (84) is connected to a third rotary joint (85) via which the fourth member (86) is rotatably supported about a third axis (95) for the purpose of the flexion/extension of a thigh,
   - the axes (93, 94, 95) pass through a common point (91), and
   - the first axis (93) with the second axis (94) forms a first angle ($\varphi_1$) and the second axis (94) with the third axis (95) forms a second angle ($\varphi_2$),
   - the first axis (93) may be rotated about a vertical axis passing through the common point (91) by a third angle ($\alpha$),
   - the first axis (93) may be rotated about a horizontal axis passing through the common point (91) by a fourth angle ($\beta$) with a value unequal to zero.

2. Device according to one of the previous claims, **characterized in that** the first angle ($\varphi_1$) has a value in the range of 25 - 45 degrees and preferably 35 degrees.

3. Device according to one of the previous claims, **characterized in that** the second angle ($\varphi_2$) has a value in the range of 60-80 degrees and preferably 70 degrees.

4. Device according to one of the previous claims, **characterized in that** the third angle ($\alpha$) and/or the fourth angle ($\beta$) has a value in the range of 10-30 degrees and preferably 20 degrees.

5. Device according to one of the previous claims, **characterized in that** the sum of the first angle ($\varphi_1$) and the second angle ($\varphi_2$) is in the range of 85 - 120 degrees and the first angle ($\varphi_1$) is in the range of 15 - 45 degrees.

6. Device according to one of the previous claims, **characterized in that** at least one of the elements (82, 84, 86) is subdivided into at least two sub-elements (82a, b, c) and adjacent ones of these sub-elements (82a, b, c) are rotatably connected to each other, respectively about an axis (94a, 94b, 94c), whereby these axes are passing through the common point (91).

7. Device according to one of the previous claims, **characterized in that** a fifth element (90; 9000) is rotatably mounted about a further axis (910) and has a surface (904) which runs parallel to the further axis (910), whereby this surface (904) is having, at least on its side remote from the axis (910), a profile which corresponds to at least two circular segments with different radii.

8. Device according to the previous claim, **characterized in that** the circles belonging to said circle segments have their centers in the vicinity of the user and/or are parallel to the frontal plane of the user.

9. Device according to one of the previous claims, **characterized in that** fastening means are provided which are designed and arranged in such a way that a user can preferably be firmly connected with his hip, his torso and/or his thighs to at least one of the elements (80a, 80b; 82; 84; 86; 90) and/or to parts of a back plate.

10. Device according to the previous claim, **characterized in that** the fastening means comprise straps, shells and/or harness.

11. Device according to one of the two previous claims, **characterized in that** the position of the fastening means can be changed by adjustment means.

12. Device according to one of the three previous claims, **characterized in that** the force carried by the fastening means can be varied by adjustment means.

13. Device according to the previous claim, **characterized in that** the force carried by the fastening means can be measured and influenced by means of the adjustment means and a control loop.

14. Device according to one of the previous claims, **characterized in that** means are provided suitable to move a foot surface (904) relative to the user.

15. Device according to one of the previous claims, **characterized in that** the fastening means are designed and controllable in such a way that they can be relaxed or moved and thus the degree of relief can be changed.

**Revendications**

1. Dispositif (1000) sous la forme d'un exosquelette ou d'un dispositif maître, dans lequel le dispositif (1000) contient un premier élément (80a, 80b), un deuxième élément (82), un troisième élément (84) et un quatrième élément (86), dans lequel

   - le premier élément (80a, 80b) est connecté à une première articulation rotative (81) par le biais de laquelle le deuxième élément (82) est logé à rotation autour d'un premier axe (93),
   - le deuxième élément (82) est connecté à une deuxième articulation rotative (83) par le biais de laquelle le troisième élément (84) est logé à rotation autour d'un deuxième axe (94),
   - le troisième élément (84) est connecté à une troisième articulation rotative (85) par le biais de laquelle le quatrième élément (86) est logé à rotation autour d'un troisième axe (95) dans le but de la flexion/l'extension d'une cuisse,
   - les axes (93, 94, 95) s'étendent à travers un point commun (91), et
   - le premier axe (93) forme avec le deuxième axe (94) un premier angle ($\varphi_1$) et le deuxième axe (94) forme avec le troisième axe (95) un deuxième angle ($\varphi_2$),
   - le premier axe (93) peut être tourné d'un troisième angle ($\alpha$) autour d'un axe vertical s'étendant à travers le point commun (91),
   - le premier axe (93) peut être tourné d'un quatrième angle ($\beta$) autour d'un axe horizontal s'étendant à travers le point commun (91).

2. Dispositif selon une des revendications précédentes, **caractérisé en ce que** le premier angle ($\varphi_1$) a une valeur dans la région de 25 à 45 degrés et de préférence de 35 degrés.

3. Dispositif selon une des revendications précédentes, **caractérisé en ce que** le deuxième angle ($\varphi_2$) a une valeur dans la région de 60 à 80 degrés et de préférence de 70 degrés.

4. Dispositif selon une des revendications précédentes, **caractérisé en ce que** le troisième angle ($\alpha$) et/ou le quatrième angle ($\beta$) a une valeur dans la région de 10 à 30 degrés et de préférence de 20 degrés.

5. Dispositif selon une des revendications précédentes, **caractérisé en ce que** la somme du premier angle ($\varphi_1$) et du deuxième angle ($\varphi_2$) se situe dans la région de 85 à 120 degrés, et le premier angle ($\varphi_1$) se situe dans la région de 15 à 45 degrés.

6. Dispositif selon une des revendications précédentes, **caractérisé en ce qu'**au moins un des éléments (82, 84, 86) est divisé en au moins deux éléments partiels (82a, b, c) et des éléments voisins de ces éléments partiels (82a, b, c) sont connectés de manière rotative entre eux et ce à chaque fois autour d'un axe (94a, 94b, 94c), dans lequel ces axes s'étendent à travers le point commun (91).

7. Dispositif selon une des revendications précédentes, **caractérisé en ce qu'**un cinquième élément (90 ; 9000) est logé à rotation autour d'un autre axe (910) et présente une surface (904) qui s'étend parallèlement à l'autre axe (910), dans lequel cette surface (904) présente un profil au moins sur son côté détourné de l'axe (910) qui correspond à au moins deux segments circulaires avec différents rayons.

**8.** Dispositif selon la revendication précédente, **caractérisé en ce que** les cercles appartenant aux dits segments circulaires ont leurs centres à proximité de l'utilisateur et/ou se situent parallèlement au plan frontal de l'utilisateur.

**9.** Dispositif selon une des revendications précédentes, **caractérisé en ce que** des moyens de fixation sont prévus, lesquels sont configurés et disposés de telle sorte qu'un utilisateur peut être connecté de préférence avec sa hanche, son torse et/ou ses cuisses de manière fixe à au moins un des éléments (80a, 80b ; 82 ; 84 ; 86 ; 90) et/ou à des parties d'un panneau arrière.

**10.** Dispositif selon la revendication précédente, **caractérisé en ce que** les moyens de fixation contiennent des sangles, enveloppes et/ou harnais.

**11.** Dispositif selon une des deux revendications précédentes, **caractérisé en ce que** la position des moyens de fixation peut être modifiée par des moyens de commande.

**12.** Dispositif selon une des trois revendications précédentes, **caractérisé en ce que** la force que portent les moyens de fixation peut être modifiée par des moyens de commande.

**13.** Dispositif selon la revendication précédente, **caractérisé en ce que** la force portée par les moyens de fixation peut être mesurée et influencée au moyen des moyens de commande et d'un circuit de régulation.

**14.** Dispositif selon une des revendications précédentes, **caractérisé en ce que** des moyens sont prévus, lesquels conviennent à déplacer une surface de pied (904) par rapport à l'utilisateur.

**15.** Dispositif selon une des revendications précédentes, **caractérisé en ce que** des moyens de fixation sont configurés et peuvent être commandés de telle sorte qu'ils peuvent être détendus ou déplacés et le degré de la décharge peut ainsi être modifié.

**1000**

rechte Seite

linke Seite

80a

94  93

92

80b

81

82

95

93

91

84

85

96

86

96

97

88

89

90

Fig. 1

Fig. 2

Fig. 3

_Fig. 4_

_Fig. 5_

Fig. 6

Fig. 7

1001

80a

90

**Fig. 8**

1001

90

91

95

94

93

80a

**Fig. 9**

1001

80a

90

Fig. 10

1001

94

91

90

95  93

80a

Fig. 11

1002

80a

80b

84

91

90

Fig. 12

1002

90

91

95

94

84b

84

84a

80b

93

80a

92

Fig. 13

1002

80a
80b
82
84
86
88
90
91

Fig. 14

1002

86
88
90
95
84b
91
84
84a
92
94
93
80b
82
80a

Fig. 15

1002

80a

80b

90

Fig. 16

1002

91

90

94

95

93

92

80b

84

82

80a

Fig. 17

1003

80a

80b

84

91

90

Fig. 18

1003

90

91

95

84b

84

84a

80b

80a

93

92

Fig. 19

1003

*Fig. 20*

1003

*Fig. 21*

1003

80a

80b

90

<u>Fig. 22</u>

1003

91

94

90

95

93

92

80b

84b

84

84a

82

80a

<u>Fig. 23</u>

Fig. 24

Fig. 25

Fig. 26

3000

201

202

211

200

203

210

P1

250

P3

250

P2

252

254

Fig. 27

3000

202

207

206

208

201

220

205

200

254

Fig. 28

3000

202
207
201
213
208
214
220
205
206
212
200
254

Fig. 29

3000

202
201
203
200
254

Fig. 30

203

204

Fig. 31

9000

910

902

904

<u>Fig. 32</u>

9000

902

904

<u>Fig. 33</u>

9000

902

904

Fig. 34

9000

902

904

Fig. 35

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102010023914 A1
- US 5650704 A, G. Pratt, M. Williamson
- WO 2015002850 A1
- WO 2013186705 A2
- WO 2013189693 A
- US 2011167945 A1
- US 3468179 A

### In der Beschreibung aufgeführte Nicht-Patentliteratur

- **J. PRATT, KRUPP**. *Series Elastic Actuators for legged robots*, 2004
- **G. PRATT et al.** *Stiffness Isn't Everything*, 1995
- **JUNG-HOON KIM et al.** *Design of a Walking Assistance Lower Limb Exoskeleton for Paraplegic Patients and Hardware Validation Using Cop*, http://cdn.intechopen.com/pdfs-wm/42836.pdf
- **QINGCONG WU**. *Exoskeleton for Walking Assistance*
- **YANG WEI et al.** *Design of an anthropomorphic lower extremity exoskeleton with compatible joints*